(19) Europäisches Patentamt
European Patent Office
Office européen des brevets

(11) EP 2 002 963 A2

(12) # EUROPEAN PATENT APPLICATION

published in accordance with Art. 153(4) EPC

(43) Date of publication:
**17.12.2008 Bulletin 2008/51**

(21) Application number: **07739649.7**

(22) Date of filing: **26.03.2007**

(51) Int Cl.:
***B29C 55/02*** *(2006.01)* ***C08F 10/02*** *(2006.01)*
***C08J 5/18*** *(2006.01)* ***C08L 23/00*** *(2006.01)*
***C08L 23/04*** *(2006.01)* ***C08L 23/10*** *(2006.01)*
***B29K 23/00*** *(2006.01)* ***B29K 91/00*** *(2006.01)*
***B29L 7/00*** *(2006.01)*

(86) International application number:
**PCT/JP2007/056211**

(87) International publication number:
**WO 2007/114102 (11.10.2007 Gazette 2007/41)**

(84) Designated Contracting States:
**DE**

(30) Priority: **30.03.2006 JP 2006095416**
**30.03.2006 JP 2006095419**
**30.03.2006 JP 2006095420**

(71) Applicant: **Mitsui Chemicals, Inc.**
**Tokyo 105-7117 (JP)**

(72) Inventors:
- **UOSAKI, Hirotaka**
**Sodegaura-shi, Chiba 299-0265 (JP)**
- **KAWABE, Kuniaki**
**Sodegaura-shi, Chiba 299-0265 (JP)**
- **YASUI, Motoyasu**
**Sodegaura-shi, Chiba 299-0265 (JP)**
- **SUZUKI, Terufumi**
**Sodegaura-shi, Chiba 299-0265 (JP)**
- **NAKAMURA, Hideo**
**Koga City, Ibaraki 306-0213 (JP)**
- **AMADA, Yasushi**
**Tokyo 104-0031 (JP)**

(74) Representative: **HOFFMANN EITLE**
**Patent- und Rechtsanwälte**
**Arabellastrasse 4**
**81925 München (DE)**

(54) **PROCESS FOR PRODUCING ORIENTED FILM**

(57) [OBJECT]

Disclosed is to provide a process for producing a film by using a raw material comprising a polyethylene having a density of 900 to 980 kg/m$^3$ or a polypropylene, whereby improving the productivity at the time of producing the film by a stretch molding. Further the film is obtained without impairing the optical characteristics and mechanical characteristics, which are intrinsic characteristics of polyethylene or polypropylene.

[SOLVING MEANS]

A process for producing a film by a stretch molding of a mixture comprising a polyethylene and a polyethylene wax, the polyethylene having a density of 900 to 980 kg/m$^3$ and an MI of 0.01 to 100 g/10-minutes as measured at 190°C and a testing load of 21.18 N in accordance with JIS K7210 or a polypropylene, and the polyethylene wax having a density of 890 to 980 kg/m$^3$ and a number-average molecular weight (Mn) of 500 to 4,000 as measured by the gel permeation chromatography (GPC) and satisfying the relationship shown by the following equation (I).

$$B \leq 0.0075 \times K \quad (I)$$

(In the above formula (I), B represents the weight ratio (% by weight) of a component having a molecular weight of 20, 000 or more in terms of polyethylene as measured by the gel permeation chromatography in the polyethylene wax, and K represents the melt viscosity (mPa·s) of the polyethylene wax at 140°C.)

EP 2 002 963 A2

## Description

[Field of the Invention]

The present invention relates to a process for producing a film by a stretch molding. More specifically, the present invention relates to a process for producing a film by a stretch molding, using a raw material composed of a polyethylene or a polypropylene having a density in a specific range, and a specific polyethylene wax.

[Background Art]

Conventionally, a film of polyethylene or polypropylene obtained by a stretch molding has been developed to be used for various uses. In recent years, the improvement of productivity in this stretch molding has been even more strongly desired. As a general way to improve the productivity in the molding such as a stretch molding and the like, there is a known method for molding in which a molding auxiliary agent is added. For example, a method for molding in which a molding auxiliary agent such as an oil, a polyethylene wax, or the like is applied to a thermoplastic resin has been investigated (for instance, Patent Documents 1 and 2).

When a film is formed by stretch molding of such a resin as polyethylene or the like using a conventional molding auxiliary agent, the moldability itself tends to be improved. However, the characteristics of a film obtained, for instance, optical characteristics such as transparency and the like, mechanical characteristics such as impact resistance and the like, and others, are sometimes deteriorated. Thus, applying the method for films has had problems depending on the uses.

[Patent Document 1] Japanese Patent Application Publication No. H5-80492
[Patent Document 2] Japanese Patent Application Laid-Open No. 2003-528948

[Disclosure of the Invention]

[Problems to be Solved by the Invention]

An object of the present invention is to provide a process for producing a film of polyethylene or polypropylene with improved productivity at the time of a stretch molding, and yet obtaining the film without impairing optical characteristics such as transparency and the like and mechanical characteristics such as impact resistance and the like.

[Means for Solving the Problems]

The present inventors have investigated the problems as mentioned above, and have found that, when a stretching molding is done using a raw material composed of a polyethylene or a polypropylene having a density in a specific range, and a specific polyethylene wax, productivity thereof is improved. The present inventors have also found that in addition to the improvement of the productivity, a film is obtained without impairing optical characteristics such as transparency and the like, which are intrinsic characteristics of polyethylene or polypropylene, and mechanical characteristics such as impact resistance and the like. Based on these findings, the present invention has been accomplished.

Accordingly, methods for producing a film of the present invention are as follows:

[1] A process for producing an orientated film by stretch molding of a mixture comprising a polyolefin resin and a polyethylene wax, the polyethylene wax having a density of 890 to 980 kg/$m^3$ as measured by the density gradient tube method in accordance with JIS K7112 and a number-average molecular weight (Mn) in terms of polyethylene of 500 to 4,000 as measured by the gel permeation chromatography (GPC), and satisfying the relationship shown by the following equation (I).

$$B \leq 0.0075 \times K \quad \ldots (I)$$

(In the above formula (I), B represents a content ratio (% by weight) of a component having a molecular weight of 20, 000 or more in terms of polyethylene in the polyethylene wax as measured by the gel permeation chromatography, and K represents the melt viscosity (mPa·s) of the polyethylene wax at 140°C.)

[2] A process for producing an orientated film according to [1], wherein the polyethylene wax further satisfies the relationship shown by the following equation (II).

$$A \leq 230 \times K^{(-0.537)} \quad ...(II)$$

(In the above formula (II), A represents a content ratio (% by weight) of a component having a molecular weight of 1, 000 or less in terms of polyethylene in the polyethylene wax as measured by the gel permeation chromatography, and K represents a melt viscosity (mPa·s) of the polyethylene wax at 140°C.)

[3] A process for producing an orientated film according to [1] or [2], wherein the polyolefin resin is a polyethylene (1) having a density of 900 kg/m$^3$ or more and less than 940 kg/m$^3$ as measured by the density gradient tube method in accordance with JIS K7112 and an MI of 0.01 to 100 g/10-minutes as measured at 190°C under a testing load of 21.18 N in accordance with JIS K7210.

[4] A process for producing an orientated film according to [1] or [2], wherein the polyolefin resin is a polyethylene (2) having a density of 940 to 980 kg/m$^3$ as measured by the density gradient tube method in accordance with JIS K7112 and an MI of 0.01 to 100 g/10-minutes as measured at 190°C under a testing load of 21.18 N in accordance with JIS K7210, and the polyethylene wax has a number-average molecular weight (Mn) of 500 to 3,000 in terms of polyethylene as measured by the gel permeation chromatography (GPC).

[5] A process for producing an orientated film according to [1] or [2], wherein the polyolefin resin is a polypropylene having an MI of 0.01 to 100 g/10-minutes as measured at 230°C under a testing load of 21.18 N in accordance with JIS K7210, and the polyethylene wax has a density of 890 to 950 kg/m$^3$ as measured by the density gradient tube method in accordance with JIS K7112 and a number-average molecular weight (Mn) of 700 to 4, 000 in terms of polyethylene as measured by the gel permeation chromatography (GPC).

[6] A process for producing an orientated film according to any of [1] to [5], wherein a mixture containing 0.01 to 10 parts by weight of the polyethylene wax relative to 100 parts by weight of the polyolefin resin is used.

[Effects of the Invention]

According to the process for producing a film of the present invention, the productivity at the time of the stretch molding of polyethylene or polypropylene is excellent. In addition, a film of polyethylene or polypropylene is obtained by the stretch molding, without impairing the optical characteristics such as transparency and the like, which are inherent in polyethylene or polypropylene, as well as mechanical characteristics such as impact resistance and the like.

[Best Mode for Carrying Out the Invention]

Hereinafter, the present invention will be explained in detail.

First of all, the explanation will be made on the raw materials used for the stretch molding of the present invention.

[Polyethylene]

In the present invention, the term, a polyethylene, refers to an ethylene homopolymer, a copolymer of ethylene and an α-olefin, or a blend thereof. The polyethylene has a density of 900 to 980 kg/m$^3$ as measured by the density gradient tube method in accordance with JIS K7112 , and an MI of 0.01 to 100 g/10-minutes as measured at 190°C under a testing load of 21.18 N in accordance with JIS K7210. As the above-mentioned polyethylene (1), there may be mentioned an ethylene homopolymer, a copolymer of ethylene and an α-olefin, or a blend thereof, which has a density of 900 kg/m$^3$ or more and less than 940 kg/m$^3$, and an MI of 0.01 to 100 g/10-minutes as measured at 190°C under a testing load of 21.18 N in accordance with JIS K7210. The polyethylene (1) is not particularly restricted as long as it has a density of 900 kg/m$^3$ or more and less than 940 kg/m$^3$. However, there may be specifically mentioned a low density polyethylene, a medium-density polyethylene, a linear low density polyethylene, an ultra low density polyethylene, or a blended product thereof.

As the above-mentioned polyethylene (2), there may be mentioned an ethylene homopolymer, a copolymer of ethylene and an α-olefin, or a blend thereof, which has a density of 940 to 980 kg/m$^3$, and an MI 0.01 to 100 g/10-minutes as measured at 190°C and a testing load of 21.18 N in accordance with JIS K7210. The polyethylene (2) is not particularly restricted as long as its density is 940 to 980 kg/m$^3$. However, there may be specifically mentioned a high density polyethylene or a blended product thereof.

In the present invention, the density and MI of the polyethylene are measured under the following conditions.

(Density)

The density is measured by the density gradient tube method in accordance with JIS K7112.

As mentioned above, the density of the polyethylene (1) used in the present invention is 900 kg/$m^3$ or more and less than 940 kg/$m^3$, but preferably 900 to 930 kg/$m^3$. When the density of the polyethylene (1) is in the above-mentioned range, an obtained film is excellent in balance of gloss, transparency, blocking properties, and the like. The density of the polyethylene (2) is 940 to 980 kg/$m^3$, but preferably 950 to 980 kg/$m^3$. When the density of the polyethylene (2) is in the above-mentioned range, an obtained film is excellent in rigidity and impact resistance.

(MI)

The MI is measured at 190°C under a testing load of 21.18 N in accordance with JIS K7210.

The MI (JIS K7210: 190°C) of the polyethylene (1) is preferably in the range of 0.1 to 5.0 g/10-minutes, and more preferably 0.5 to 4.0 g/10-minutes. When the MI of the polyethylene (1) is in the above-mentioned range, a film may be obtained in excellent balance between moldability and mechanical strength.
The MI (JIS K7210: 190°C) of the polyethylene (2) is preferably in the range of 0.01 to 2.0 g/10-minutes, and more preferably 0.01 to 1.5 g/10-minutes. When the MI of the polyethylene (2) is in the above-mentioned range, a film may be obtained in excellent balance between moldability and mechanical strength.

The shape of the polyethylene is not particularly restricted, but is usually particles in the form of pellets or tablets.

[Polypropylene]

The term, a polypropylene, used in the present invention specifically refers to a homopolymer of propylene, a copolymer of propylene and an $\alpha$-olefin (other than propylene), or a blend thereof, which has an MI of 0.01 to 100 g/10-minutes as measured at 230°C under a testing load of 21.18 N in accordance with JIS K7210. As the polypropylene, there may be specifically mentioned a propylene homopolymer, a polypropylene block copolymer or a polypropylene random copolymer obtained by polymerizing propylene with an a-olefin (other than propylene), or a blend thereof.

In the present invention, the MI of the polypropylene was measured under the following conditions.

(MI)

The MI is measured at 230°C under a testing load of 21.18 N in accordance with JIS K7210.

The shape of the polypropylene is not particularly restricted, but is usually particles in the form of pellets or tablets.

The density of the polypropylene is usually in the range of 900 to 910 kg/$m^3$.

[Polyethylene wax]

The term, a polyethylene wax, in the present invention refers to a homopolymer of ethylene, copolymer of ethylene and an $\alpha$-olefin, or a blend thereof, which has a number-average molecular weight (Mn) of in the range of 500 to 4000 in terms of polyethylene as measured by the gel permeation chromatography (GPC).

The number-average molecular weight (Mn) of the polyethylene wax in terms of polyethylene is measured by the gel permeation chromatography (GPC) in the same measurement conditions as those for the polyethylene, namely in the following conditions.

(Number-average molecular weight (Mn))

The number-average molecular weight is obtained by the GPC measurements. The measurement is conducted in the following conditions. The number-average molecular weight is measured by making a calibration curve with the use of a commercially available monodisperse standard polystyrene, and then performing calculation in accordance with the following conversion method. Apparatus: Gel Permeation Chromatograph Alliance GPC2000-type (manufactured by Waters Corp.)
Solvent: o-dichlorobenzene
Column: TSK gel column (manufactured by Tosoh Corp.) $\times$ 4
Flow rate: 1.0 ml/minute
Sample: 0.15 mg/ml o-dichlorobenzene
Temperature: 140°C
Molecular weight conversion: PE conversion/general calibration method

Here, it must be noted that calculation of the general calibration method is conducted by using the coefficients

of the Mark-Houwink viscosity equation as shown below.

$$\text{Coefficient of polystyrene (PS): } KPS = 1.38\times10^{-4},\ aPS = 0.70$$

$$\text{Coefficient of polyethylene (PE): } KPE = 5.06\times10^{-4},\ aPE = 0.70$$

The polyethylene wax with the above composition and molecular weight tends to be improved in the productivity at the time of molding.

When the polyolefin resin of the present invention as a raw material is the polyethylene (1) or the polyethylene (2), the density of the polyethylene wax to be applied is in the range of 890 to 980 kg/$m^3$. The density of the polyethylene wax is a value measured by the density gradient tube method in accordance with JIS K7112. When the density of the polyethylene wax is in the above-mentioned range, the productivity at the time of molding tends to be improved. Further, an oriented film, obtained from a mixture composed of the polyethylene wax having a density in the above-mentioned range and the polyethylene, tends to have excellent optical characteristics such as transparency and the like.

When the polyolefin resin of the present invention as a raw material is propylene, the density of the polyethylene wax to be applied is in the range of 890 to 950 kg/$m^3$. The density of the polyethylene wax is a value measured by the density gradient tube method in accordance with JIS K7112. When the density of the polyethylene wax is in the above-mentioned range, the productivity at the time of molding tends to be improved.

The polyethylene wax of the present invention is characterized in that there is a specific relationship between the molecular weight and the melt viscosity thereof as shown in the following equation (I).

$$B \leq 0.0075\times K \qquad \ldots(I)$$

Here, in the above formula (I), B represents the content ratio (% by weight) of a component having a molecular weight of 20,000 or more in terms of polyethylene in the polyethylene wax as measured by the gel permeation chromatography. K represents the melt viscosity (mPa·s) of the polyethylene wax at 140°C as measured by the Brookfield viscometer (B-type).

When the polyethylene wax satisfying the equation (I) is used, a film tends to be obtained without impairing the intrinsic characteristics of polyethylene or polypropylene.

Specifically, when the polyolefin resin as a raw material is the polyethylene (1) and the polyethylene wax satisfying the above equation (I) is applied, a film is obtained without impairing the optical characteristics such as transparency and the like, which are intrinsic characteristics of the polyethylene (1), as well as the mechanical characteristics such as the impact resistance and the like.

Further, when the polyolefin resin as a raw material is the polyethylene (2) and the polyethylene wax satisfying the above equation (I) is applied, the obtainable film is excellent in optical characteristics such as transparency and the like, which are intrinsic characteristics of the polyethylene (2). In addition, the film also tends to be obtained without impairing the mechanical characteristics such as impact resistance and the like, which are intrinsic characteristics of polyethylene itself.

Further, when the polyolefin resin as a raw material is propylene and the polyethylene wax satisfying the above equation (I) is applied, a film is obtained without impairing the optical characteristics such as transparency and the like, which are intrinsic characteristics of propylene. In addition, the film tends to be obtained also without impairing the mechanical characteristics such as impact resistance and the like.

Usually, when the polyethylene is mixed with the polyethylene wax having low melt viscosity and the mixture is then stretch molded, the viscosity of the entire mixture are lowered to lower the maximum stretch stress and the like. Therefore, the productivity at the time of molding tends to be improved. However, even though the productivity is improved as mentioned above, the resulting film is often impaired in, for example, the optical characteristics such as transparency and the like, which are intrinsic characteristics of polyethylene, and the mechanical characteristics such as impact resistance and the like.

Also in the case of polypropylene, usually when the polypropylene is mixed with a polyethylene wax having low melt viscosity and the mixture is then stretch molded, the viscosity of the entire mixture is lowered. Therefore, the productivity at the time of molding tends to be improved. However, even though the productivity is improved as mentioned above, the mechanical characteristics of the film obtained are not always fully satisfactory, and furthermore, the optical

characteristics is often impaired.

The present inventors have studied the above problems and found that the following is extremely important for the optical characteristics such as transparency and the like and mechanical characteristics such as impact resistance and the like of a film obtained by a stretch molding. Namely, the ratio of the component having a molecular weight of 20,000 or more in the polyethylene wax to be used is extremely important in the relationship with the melt viscosity.

Although the details are not clear, the mechanism is presumed as follows. When a polyethylene wax and a polyethylene are melt kneaded, the molten behavior of the component having a molecular weight of 20,000 or more is unique among the entire polyethylene wax. Therefore, considering the melt viscosity of the entire polyethylene wax, it is presumed that unless the content ratio of the component having a molecular weight of 20,000 or more in the polyethylene wax is decreased to a certain ratio or low, the polyethylene wax cannot be well dispersed into polyethylene. This is presumed to exert an influence on the mechanical and optical characteristics of the finally obtained film.

Similarly, in the case of polypropylene, although the details are not clear, the mechanism thereof is presumed as follows. When a polyethylene wax and a polypropylene are melt kneaded, the molten behavior of the component having a molecular weight of 20,000 or more is unique among the entire polyethylene wax. Therefore, considering the melt viscosity of the entire polyethylene wax, it is presumed that unless the content ratio of the component having a molecular weight of 20,000 or more in the polyethylene was is decreased to a certain ratio or low, the polyethylene wax cannot be well dispersed into polypropylene. This is presumed to exert an influence on the mechanical and optical characteristics of the finally obtained film.

The polyethylene wax with the B value in the above-mentioned range may be prepared by using a metallocene catalyst. Among the metallocene catalysts, a metallocene catalyst having a non bridged ligand is preferable. As such metallocene catalysts, a metallocene compound represented by the general formula (1) which will be mentioned later may be mentioned as the examples.

Furthermore, the B value may also be controlled by polymerization temperature. For instance, when a polyethylene wax is prepared by using the metallocene catalyst which will be mentioned later, polymerization temperature is usually in the range of 100 to 200°C. However, from the viewpoint of preparing the polyethylene wax with the above mentioned B value, the temperature is preferably in the range of 100 to 180°C and more preferably 100 to 170°C.

The polyethylene wax of the present invention preferably has a further specific relationship between its molecular weight and melt viscosity as shown by the following equation (II).

$$A \leq 230 \times K^{(-0.537)} \quad \ldots(II)$$

Here, in the above formula (II), A represents a weight ratio (% by weight) of the component having a molecular weight of 1,000 or less in terms of polyethylene as measured by the gel permeation chromatography in the polyethylene wax, and K represents a melt viscosity (mPa·s) of the polyethylene wax at 140°C.

When the polyethylene wax satisfying the above equation (II) is used, a film tends to be obtained without impairing the intrinsic characteristics of polyethylene or polypropylene.

Specifically, when the polyolefin resin as a raw material is the polyethylene (1) and the polyethylene wax satisfying the above equation (II) is applied, a film tends to be obtained without impairing the optical characteristics such as transparency and the like, and mechanical characteristics such as impact resistance and the like, which are intrinsic characteristics of the polyethylene (1). In addition, the bleed-out from the surface of the film obtained becomes less.

Further, when the polyolefin resin as a raw material is the polyethylene (2) and the polyethylene wax satisfying the above equation (II) is applied, the obtainable film is excellent in the optical characteristics such as transparency and the like. Further, the film tends to be obtained without impairing the mechanical characteristics such as impact resistance and the like, which are intrinsic characteristics of the polyethylene (2). In addition, the bleed-out from the surface of the film obtained becomes less.

Further, when the polyolefin resin as a raw material is polypropylene and the polyethylene wax satisfying the above equation (II) is applied, a film tends to be obtained without impairing the mechanical characteristics and optical characteristics, which are intrinsic characteristics of polypropylene. In addition, the bleed-out from the surface of the molded article becomes less.

As mentioned above, usually when a polyethylene wax having low melt viscosity is applied to polyethylene and the stretch molding is performed, the viscosity of the entire mixture is lowered and the maximum stretch stress and the like tends to be lowered. Therefore, the productivity at the time of molding tends to be improved. However, even though the productivity is improved, the resulting film is often impaired in the intrinsic characteristics of polyethylene, for example, the mechanical characteristics such as impact resistance and the like and the optical characteristics such as transparency and the like. Further, a bleed-out from the surface of the film surface became a problem.

Also in the case of polypropylene, usually when a polyethylene wax having a low melt viscosity is applied to

polypropylene and a stretch molding is performed, the viscosity of the entire mixture is lowered. Therefore, the productivity at the time of molding tends to be improved. However, even though the productivity is improved, the resulting film is often impaired in the mechanical characteristics, which are intrinsic characteristics of polypropylene, and in addition is often impaired in the optical characteristics. Further, the bleed-out from the surface of the film became a problem as well.

The present inventors have studied the problems and found that the following is extremely important for mechanical characteristics, optical characteristics, a bleed-out, and the like of the film obtained by a stretch molding. Namely, the content ratio of the component having a molecular weight of 1,000 or less in the polyethylene wax to be used is extremely important in the relationship with the melt viscosity.

Although the details are not clear, the mechanism is presumed as follows. When a polyethylene wax and polyethylene are melt kneaded, the component having a molecular weight of 1, 000 or less is easily melted, and the molten behavior thereof is unique among the entire polyethylene wax. Therefore, considering the melt viscosity of the entire polyethylene wax, it is presumed that unless the content ratio of the component having a molecular weight of 1, 000 or less is decreased to a certain ratio or less, it oozes out to a surface. Further, it is also presumed that the ethylene wax causes the deterioration and the like in some cases, and exerts an influence on the mechanical characteristics, optical characteristics, and bleed-out of the finally obtained film.

Similarly, in the case of polypropylene, although details are not clear, the mechanism thereof is presumed as follows. When a polyethylene wax and polypropylene in an molded article are melt kneaded, the component having a molecular weight of 1, 000 or less is easily melted, and the molten behavior thereof is unique among the entire polyethylene wax. Therefore, considering the melt viscosity of the entire polyethylene wax, it is presumed that unless the content ratio of the component having a molecular weight of 1,000 or less is decreased to a certain ratio or low, it oozes out to a surface. Further, it is also presumed that the ethylene wax causes the deterioration and the like in some cases, and exerts an influence on the mechanical characteristics, optical characteristics, and bleed-out of the finally obtained article.

The polyethylene wax with the A value in the above-mentioned range may be prepared by using a metallocene catalyst. Among the metallocene catalysts, a metallocene catalyst having a non bridged ligand is preferable. As such metallocene catalyst, metallocene compounds represented by the general formula (1) which will be mentioned later may be mentioned as the examples.

Furthermore, the A value may also be controlled by polymerization temperature. For instance, when a polyethylene wax is prepared by a metallocene catalyst which will be mentioned later, polymerization temperature is usually in the range of 100 to 200°C. However, from the viewpoint of preparing the polyethylene wax with the above mentioned A value, the temperature is preferably 100 to 180°C and more preferably 100 to 170°C.

The number-average molecular weight (Mn) of the polyethylene wax is in the range of 500 to 4,000. However, when the polyethylene (1) is used as the polyolefin resin, the polyethylene wax preferably has a number-average molecular weight (Mn) of in the range of 600 to 3,800, and particularly preferably in the range of 700 to 3,500. When the number average molecular weight (Mn) of the polyethylene wax is in the above-mentioned range, the dispersion of the polyethylene wax into the polyethylene tends to become further better at the time of molding. In addition, since tendency of increase in the extruder output and a tendency of decrease in the load at the time of extrusion become more prominent, the productivity tends to more increase. In addition, the obtainable film is excellent in transparency and the surface characteristics thereof have a great tendency to be not inferior to those of a film obtained without adding the polyethylene wax.

Further, when the polyethylene (2) is used as the polyolefin resin, the polyethylene wax has a number-average molecular weight (Mn) of in the range of 500 to 3,000, preferably in the range of 700 to 3,000, and particularly preferably in the range of 800 to 3,000. When the number average molecular weight (Mn) of the polyethylene wax is in the above-mentioned range, the dispersion of the polyethylene wax into a polyethylene tends to become further better at the time of molding. In addition, since tendency of increase in the extruder output and a tendency of decrease in the load at the time of extrusion become more prominent, the productivity tends to more increase. In addition, the obtainable film is excellent in transparency and the surface characteristics thereof has a great tendency to be not inferior to those of a film obtained without adding the polyethylene wax.

Further, when polypropylene is used as the polyolefin resin, the polyethylene wax has a number-average molecular weight (Mn) of in the range of 700 to 4,000. When the number average molecular weight (Mn) of the polyethylene wax is in the above-mentioned range, the dispersion of the polyethylene wax into a polypropylene tends to become better at the time of molding. In addition, since a tendency of increase in the extruder output and a tendency of decrease in the load at the time of extrusion become more prominent, the productivity tends to more increase. In addition, a film tends to be obtained with the mechanical characteristics, which are not inferior to those of the molded article obtained without adding the polyethylene wax. Further, the polyethylene wax preferably has a number-average molecular weight (Mn) of in the range of 800 to 3,800. When the number-average molecular weight (Mn) of the polyethylene wax is in the preferred range, not only a film is obtained without impairing the mechanical characteristics but also the mechanical characteristics are often improved.

The Mn of the polyethylene wax may be controlled by polymerization temperature and the like. For instance,

when the polyethylene wax is prepared by a metallocene catalyst which will be mentioned later, the polymerization temperature is usually in the range of 100 to 200°C. However, from the viewpoint of preparing the polyethylene wax having an Mn in the preferable range, the temperature is preferably in the range of 100 to 180°C and more preferably 100 to 170°C.

Further, the polyethylene wax has a density (D: $kg/m^3$) of in the range of 890 to 980 $kg/m^3$. However, when the polyethylene (1) is used as the polyolefin resin, the polyethylene wax preferably has a density of in the range of 895 to 960 $kg/m^3$, more preferably in the range of 895 to 945 $kg/m^3$, and particularly preferably in the range of 900 to 945 $kg/m^3$. When the polyethylene wax has a density (D) of in the above-mentioned range, the dispersion of the polyethylene wax into the polyethylene tends to become further better at the time of molding. In addition, since a tendency of increase in the extruder output and a tendency of decrease in the load at the time of extrusion become more prominent, the productivity tends to more increase. In addition, a film not only tends to be obtained with the optical characteristics, which is not inferior to those of the film obtained without adding the polyethylene wax. Besides, the film has a great tendency to be obtained with the mechanical characteristics, which are not inferior to those of the film obtained without adding the polyethylene wax. In particular, the polyethylene wax preferably has a density of in the range of 900 to 945 $kg/m^3$, because the obtainable film has more excellent impact resistance as compared with those of the film obtained without adding the polyethylene wax.

Further, when the polyethylene (2) is used as the polyolefin resin, the polyethylene wax preferably has a density (D: $kg/m^3$) of in the range of 895 to 980 $kg/m^3$. When the polyethylene wax has a density (D) of in the range, the dispersion of the polyethylene wax into the polyethylene tends to become further better at the time of molding. In addition, since a tendency of increase in the extruder output and tendency of decrease in the load at the time of extrusion become more prominent, the productivity tends to more increase. In addition, a molded article tends to be obtained with the mechanical characteristics, which are not inferior to those of the film obtained without adding the polyethylene wax.

Further, when polypropylene is used as the polyolefin resin, the polyethylene wax has a density (D: $kg/m^3$) of in the range of 890 to 950 $kg/m^3$. When the polyethylene wax has a density (D) of in the above-mentioned range, the dispersion of the polyethylene wax into polypropylene tends to become better at the time of molding. In addition, since tendency of increase in the extruder output and a tendency of decrease in the load at the time of extrusion become more prominent, the productivity tends to increase. In addition, a molded article tends to be obtained with the mechanical characteristics, which are not inferior to those of the article obtained without adding the polyethylene wax. Further, when the polyethylene wax has a density of outside the above-mentioned range, the optical characteristics tend to be deteriorated to cause the bleed-out in some cases. Although details are not clear, the mechanism is presumed as follows. when the polyethylene wax has a density of outside the range, the density difference between the polyethylene wax and the polypropylene becomes so large that the compatibility of the polyethylene wax with the polypropylene is deteriorated. Therefore, the optical characteristics tend to be deteriorated and bleed-out occurs in some cases. Further, the polyethylene wax preferably has a density (D) of in the range of 895 to 945 $kg/m^3$. When the polyethylene wax has a density (D) of in the above preferable range, a molded article has a great tendency to be obtained without impairing the optical characteristics.

When the polyethylene wax is an ethylene homopolymer, the density of the polyethylene wax is dependent on the number-average molecular weight (Mn) of the polyethylene wax. For instance, if the molecular weight of the polyethylene wax is made lower, the density of the obtainable polymer may be made lower. When the polyethylene wax is a copolymer of ethylene with an $\alpha$-olefin, the density of the polyethylene wax is dependent on the magnitude of the number-average molecular weight (Mn) and can also be controlled by the content of the $\alpha$-olefin to ethylene and kind thereof at the time of the polymerization. For instance, if the content of the $\alpha$-olefin to ethylene is increased, the density of the obtainable polymer may be made lower.

From the viewpoint of the density of the polyethylene wax, an ethylene homopolymer, a copolymer of ethylene with an $\alpha$-olefin having 3 to 20 carbon atoms, or a mixture thereof are preferable.

As the $\alpha$-olefins used in the preparation of the copolymer of ethylene and an $\alpha$-olefin having 3 to 20 carbon atoms, an $\alpha$-olefin having 3 to 10 carbon atoms is preferable, and propylene, 1-butene, 1-pentene, 1-hexene, 4-methyl-1-pentene, and 1-octene are more preferable, and propylene, 1-butene, 1-hexene, and 4-methyl-1-pentene are particularly preferable.

When the polyethylene (1) or (2) is used as the polyolefin resin as a raw material in the present invention, the content of the $\alpha$-olefin used in the preparation of the copolymer of ethylene with an $\alpha$-olefin is preferably in the range of 0 to 20% by mol relative to the total amount of the monomers used.

When polypropylene is used as the polyolefin resin as a raw material in the present invention, the content of the $\alpha$-olefin used in the preparation of the copolymer of ethylene with an $\alpha$-olefin is preferably in the range of 0 to 20% by mol, more preferably 0.1 to 15% by mol, and further preferably 0.1 to 10% by mol, relative to the total amount of the monomers used.

Also, the density of the polyethylene wax may be controlled by polymerization temperature. For instance, when the polyethylene wax is prepared by a metallocene catalyst which will be mentioned later, the polymerization temperature

is usually in the range of 100 to 200°C. However, from the viewpoint of preparing the polyethylene wax with the density in the above preferable range, the temperature is preferably in the range of 100 to 180°C and more preferably 100 to 170°C.

The polyethylene wax used in the present invention is an ethylene homopolymer, a copolymer of ethylene with an α-olefin, or a mixture thereof, as mentioned above. Such polyethylene waxes are in a solid at normal temperature and become a low-viscosity liquid at 65 to 130°C.

Furthermore, the above-mentioned polyethylene wax preferably satisfies the relationship shown by the following equations (III) between the crystallization temperature (Tc: °C) as measured by the differential scanning calorimeter (DSC) and the density (D: kg/$m^3$) as measured by the density gradient tube method,

$$0.501 \times D - 366 \geq Tc \quad ...(III)$$

more preferably satisfies the relationship shown by the following equations (IIIa)

$$0.501 \times D - 366.5 \geq Tc \quad ...(IIIa)$$

and further preferably satisfies the relationship shown by the following equations (IIIb)

$$0.501 \times D - 367 \geq Tc \quad ...(IIIb)$$

When the crystallization temperature (Tc) and the density (D) of the polyethylene wax satisfy the relationship of the equations, the dispersibility of the polyethylene wax into the polyethylene tends to become better.

The polyethylene wax satisfying the relationship of the above equations may be prepared by using a metallocene catalyst. Among the metallocene catalysts, a metallocene catalyst having a non-bridged ligand is preferable. As such metallocene catalysts, metallocene compounds represented by the general formula (1) which will be mentioned later may be mentioned as the examples.

Furthermore, the polyethylene wax satisfying the relationship of the equations may also be prepared by controlling polymerization temperature. For instance, when the polyethylene wax is prepared by the metallocene catalyst which will be mentioned later, the polymerization temperature is usually in the range of 100 to 200°C. However, from the viewpoint of preparing the polyethylene wax with the B value described above, the temperature is preferably in the range of 100 to 180°C and more preferably 100 to 170°C.

As the preferable metallocene catalyst in the present invention, for example, an olefin polymerization catalyst composed of

(A) a metallocene compound of a transition metal selected from the 4th group in the periodic table, and at least one kind of a compound selected from
(B)

- (b-1) an organoaluminum oxy compound,
- (b-2) a compound which reacts with the bridged metallocene compound (A) to form an ion pair, and
- (b-3) an organoaluminum compound

may be mentioned.

Hereinafter, these will be explained in-depth.

<Metallocene compounds>

(A) A metallocene compound of a transition metal selected from the 4th group in the periodic table

A metallocene compound forming the metallocene catalyst is a metallocene compound of a transition metal selected from the 4th group in the periodic table, and there may be mentioned the compounds represented by the following general formula (1) as specific examples.

$$M^1Lx \quad (1)$$

Here, $M^1$ represents a transition metal selected from the 4th group in the periodic table, x represents an atomic valence of the transition metal $M^1$, and L represents a ligand. Examples of the transition metals represented by $M^1$ include zirconium, titanium, hafnium, and the like. L represents a ligand coordinated to the transition metal $M^1$, and at least one of the ligands L is a ligand having a cyclopentadienyl skeleton, which may have a substituent group. As the ligand L having the cyclopentadienyl skeleton, there may be mentioned, for example, an alkyl- or cycloalkyl-substituted cyclopentadienyl group, such as a cyclopentadienyl group, a methyl cyclopentadienyl group, an ethyl cyclopentadienyl group, an n- or i-propyl cyclopentadienyl group, an n-, i-, sec-, or t-butyl cyclopentadienyl group, a dimethyl cyclopentadienyl group, a methyl propyl cyclopentadienyl group, a methyl butyl cyclopentadienyl group, a methyl benzyl cyclopentadienyl group; and further an indenyl group, a 4,5,6,7-tetrahydroindenyl group, a fluorenyl group, and the like. A hydrogen atom of the ligands having these cyclopentadienyl skeletons may be substituted with a halogen atom, a trialkylsilyl group, or others.

When the metallocene compounds contain two or more of the ligands having the cyclopentadienyl skeletons as the ligand L, two of the ligands having the cyclopentadienyl skeletons may be bonded with each other via an alkylene group such as an ethylene group, a propylene group, and the like; via a substituted alkylene group such as an isopropylidene group, a diphenylmethylene group, and the like; and via a silylene group or a substituted silylene group such as a dimethyl silylene group, a diphenyl silylene group, a methyl phenyl silylene group, and the like.

As the ligands L (the ligands not having the cyclopentadienyl skeletons) other than the ligands having the cyclopentadienyl skeletons, there may be mentioned a hydrocarbon group having 1 to 12 carbon atoms, an alkoxy group, an aryloxy group, a sulfonate-containing group ($-SO_3R^1$), a halogen atom or a hydrogen atom, and the like (here, $R^1$ represents an alkyl group, a halogen-substituted alkyl group, an aryl group, a halogen-substituted aryl group, or an alkyl-substituted aryl group).

<Example of metallocene compounds - 1>

When a metallocene compound represented by the general formula (1) has a transition metal having a valency of, for example, four, the metallocene compound is represented more specifically by the following general formula (2).

$$R^2_kR^3_lR^4_mR^5_nM^1 \quad (2)$$

Here, $M^1$ represents a transition metal selected from the 4th group in the periodic table, $R^2$ represents a group (ligand) having a cyclopentadienyl skeleton, $R^3$, $R^4$, and $R^5$ each independently represent a group (ligand) having or not having a cyclopentadienyl skeleton. Here, k represents an integer of 1 or more, and k + 1 + m + n = 4.

Examples of the metallocene compounds, whose $M^1$ are zirconium, and which have at least two ligands containing the cyclopentadienyl skeleton, are mentioned as follows: bis(cyclopentadienyl)zirconium monochloride monohydride; bis(cyclopentadienyl)zirconium dichloride; bis(1-methyl-3-butylcyclopentadienyl)zirconium bis(trifluoromethanesulfonate);
bis(1,3-dimethylcyclopentadienyl)zirconium dichloride; and the like.

In the above-mentioned compounds, a compound whose 1,3-substituted cyclopentadienyl group is substituted with a 1,2-substituted cyclopentadienyl group may also be used.

Further, the other examples of the metallocene compounds to be employed include a bridged metallocene compound wherein at least two of $R^2$, $R^3$, $R^4$, and $R^5$ in the general formula (2), for example, $R^2$ and $R^3$ are a group (ligand) having the cyclopentadienyl skeletons, and at least two of these groups are bonded via an alkylene group, a substituted alkylene group, a silylene group, or a substituted silylene group, and the like. Here, $R^4$ and $R^5$ are each independently as same as the ligands L other than the ligands having the cyclopentadienyl skeletons as mentioned above.

As such bridged metallocene compounds, there may be mentioned ethylenebis(indenyl)dimethylzirconium, ethylenebis(indenyl)zirconium dichloride, isopropylidene(cyclopentadienyl-fluorenyl)zirconium dichloride, diphenylsilylenebis(indenyl)zirconium dichloride, methylphenylsilylenebis(indenyl)zirconium dichloride, and the like.

<Examples of metallocene compounds - 2>

Further, as the examples of the metallocene compounds, there may be mentioned themetallocene compounds represented by the following general formula (3) which are disclosed in the Japanese Patent Laid-Open Publication No. H4-268307.

[Chemical Formula 1]

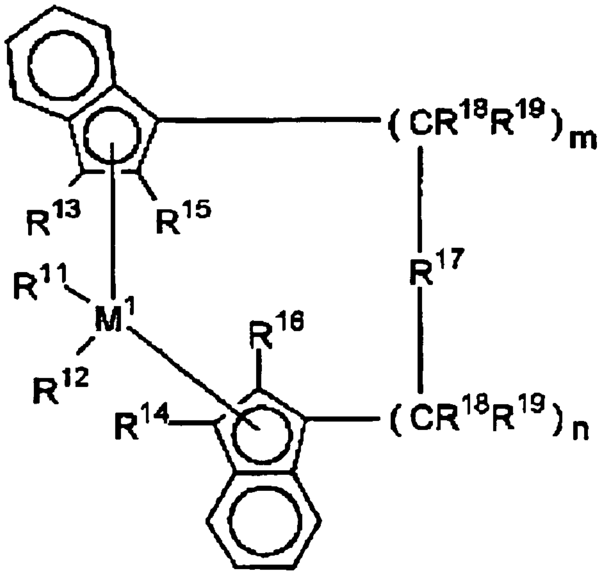

... (3)

Here, $M^1$ represents a transition metal belonging to the 4th group in the periodic table, and specifically there may be mentioned titanium, zirconium, and hafnium.

$R^{11}$ and $R^{12}$ may be the same or different from each other, and may be a hydrogen atom; an alkyl group having 1 to 10 carbon atoms; an alkoxy group having 1 to 10 carbon atoms; an aryl group having 6 to 10 carbon atoms; an aryloxy group having 6 to 10 carbon atoms; an alkenyl group having 2 to 10 carbon atoms; an arylalkyl group having 7 to 40 carbon atoms; an alkylaryl group having 7 to 40 carbon atoms; an arylalkenyl group having 8 to 40 carbon atoms; or a halogen atom, and $R^{11}$ and $R^{12}$ are preferably a chlorine atom.

$R^{13}$ and $R^{14}$ may be the same or different from each other, and may be a hydrogen atom; a halogen atom; an alkyl group having 1 to 10 carbon atoms which may be halogenated; an aryl group having 6 to 10 carbon atoms; and a group of $-N(R^{20})_2$, $-SR^{20}$, $-OSi(R^{20})_3$, $-Si(R^{20})_3$, or $-P(R^{20})_2$. Here, $R^{20}$ is a halogen atom, preferably a chlorine atom; an alkyl group having 1 to 10 carbon atoms, preferably 1 to 3 carbon atoms; or an aryl group having 6 to 10 carbon atoms, preferably 6 to 8 carbon atoms. It is particularly preferable that each of $R^{13}$ and $R^{14}$ is a hydrogen atom.

$R^{15}$ and $R^{16}$ may be the same as $R^{13}$ and $R^{14}$ except that $R^{15}$ and $R^{16}$ do not contain a hydrogen atom, and may be the same or different from each other, but preferably the same. $R^{15}$ and $R^{16}$ are preferably an alkyl group having 1 to 4 carbon atoms which may be halogenated. Specifically, there may be mentioned a methyl group, an ethyl group, a propyl group, an isopropyl group, a butyl group, an isobutyl group, a trifluoromethyl group, and the like, and a methyl group is particularly preferable.

In the general formula (3), $R^{17}$ is selected from the following groups,

[Chemical Formula 2]

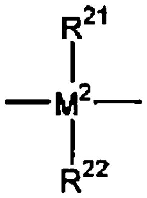 、 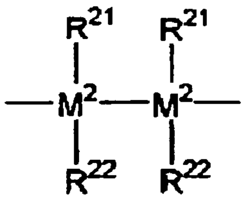 、 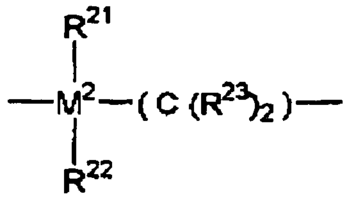 、

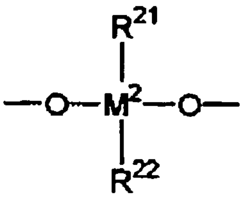 、 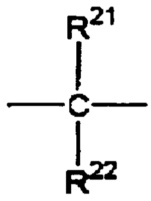 、 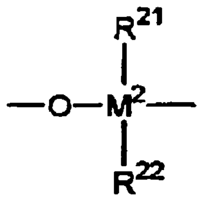 、

$=BR^{21}$, $=AlR^{21}$, -Ge-, -Sn-, -O-, -S-, =SO, $=SO_2$, $=NR^{21}$, =CO, $=PR^{21}$, $=P(O)R^{21}$, and the like. $M^2$ is silicon, germanium, or tin, but silicon or germanium is preferable. Here, $R^{21}$, $R^{22}$, and $R^{23}$ may be the same or different from each other, and may be a hydrogen atom; a halogen atom; an alkyl group having 1 to 10 carbon atoms; a fluoroalkyl group having 1 to 10 carbon atoms; an aryl group having 6 to 10 carbon atoms; a fluoroaryl group having 6 to 10 carbon atoms; an alkoxy group having 1 to 10 carbon atoms; an alkenyl group having 2 to 10 carbon atoms; an arylalkyl group having 7 to 40 carbon atoms; an arylalkenyl group having 8 to 40 carbon atoms; or an alkylaryl group having 7 to 40 carbon atoms. "$R^{21}$ and $R^{22}$" or "$R^{21}$ and $R^{23}$" may form a ring together with an atom to which each of them are bonded. Further, $R^{17}$ is preferably $=CR^{21}R^{22}$, $=SiR^{21}R^{22}$, $=GeR^{21}R^{22}$, -O-, -S-, =SO, $=PR^{21}$, or $=P(O)R^{21}$. $R^{18}$ and $R^{19}$ may be the same or different from each other, and may be the same as those of $R^{21}$. Here, m and n may be the same or different from each other. Each of m and n is 0, 1, or 2, and is preferably 0 or 1, and m + n is 0, 1, or 2, and is preferably 0 or 1.

As the examples of the metallocene compounds represented by the above general formula (3), there may be mentioned rac-ethylene(2-methyl-1-indenyl)$_2$zirconium dichloride, rac-dimethylsilylene(2-methyl-1-indenyl)$_2$zirconium dichloride, and the like. These metallocene compounds may be prepared by, for instance, the method disclosed in the Japanese Patent Laid-Open Publication No. H4-268307.

<Examples of metallocene compounds - 3>

Further, as the metallocene compounds, the compounds represented by the following general formula (4) may also be used.

[Chemical Formula 3]

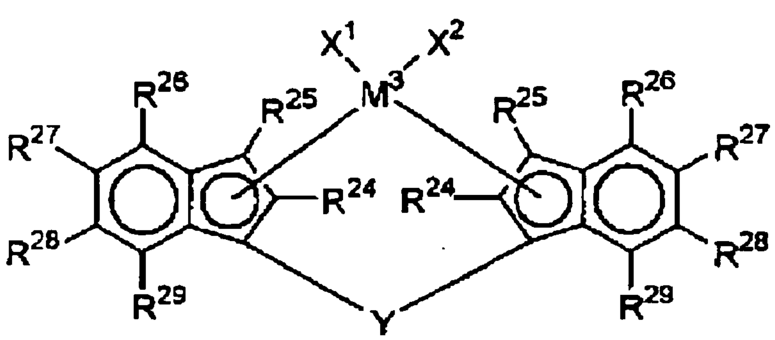 ... (4)

In the formula (4), $M^3$ represents a transition metal belonging to the 4th group in the periodic table, and specifically

they are titanium, zirconium, hafnium, and the like. $R^{24}$ and $R^{25}$ may be the same or different from each other, and represent a hydrogen atom, a halogen atom, a hydrocarbon group having 1 to 20 carbon atoms, a halogenated hydrocarbon group having 1 to 20 carbon atoms, a silicon-containing group, an oxygen-containing group, a sulfur-containing group, a nitrogen-containing group, or a phosphorus-containing group. $R^{24}$ is preferably a hydrocarbon group, and in particular an alkyl group having 1 to 3 carbon atoms, namely a methyl group, an ethyl group, or a propyl group. $R^{25}$ is preferably a hydrogen atom or a hydrocarbon group, and in particular a hydrogen atom or an alkyl group having 1 to 3 carbon atoms, namely, a methyl group, an ethyl group, or a propyl group. $R^{26}$, $R^{27}$, $R^{28}$, and $R^{29}$ may be the same or different from each other, and represent a hydrogen atom, a halogen atom, a hydrocarbon group having 1 to 20 carbon atoms, or a halogenated hydrocarbon group having 1 to 20 carbon atoms. Among them, the hydrogen atom, the hydrocarbon group, and the halogenated hydrocarbon group are preferable. At least one pair selected from "$R^{26}$ and $R^{27}$", "$R^{27}$ and $R^{28}$", and "$R^{28}$ and $R^{29}$" may form a monocyclic aromatic ring together with a carbon atom to which they are bonded. Further, when there are two or more of hydrocarbon groups or halogenated hydrocarbon groups in addition to groups which form an aromatic group, two or more of hydrocarbon groups or halogenated hydrocarbon groups may be bonded with each other to form a ring structure. Here, when $R^{29}$ is a substituent group other than an aromatic group, $R^{29}$ is preferably a hydrogen group. $X^1$ and $X^2$ may be the same or different from each other, and represent a hydrogen atom, a halogen atom, a hydrocarbon group having 1 to 20 carbon atoms, a halogenated hydrocarbon group having 1 to 20 carbon atoms, an oxygen-containing group, or a sulfur-containing group. Y represents a divalent hydrocarbon group having 1 to 20 carbon atoms, a divalent halogenated hydrocarbon group having 1 to 20 carbon atoms, a divalent silicon-containing group, a divalent germanium-containing group, a divalent tin-containing group, -O-, -CO-, -S-, -SO-, $-SO_2-$, $-NR^{30}-$, $-P(R^{30})-$, $-P(O)(R^{30})-$, $-BR^{30}-$, or $-AlR^{30}-$ (here $R^{30}$ represents a hydrogen atom, a halogen atom, a hydrocarbon group having 1 to 20 carbon atoms, and a halogenated hydrocarbon group having 1 to 20 carbon atoms).

Ligands represented by the following formulae may be mentioned as examples of ligands coordinated to $M^3$ wherein in the formula (4), at least one pair selected from "$R^{26}$ and $R^{27}$", "$R^{27}$ and $R^{28}$", and "$R^{28}$ and $R^{29}$" is bonded each other to form a monocyclic aromatic ring.

[Chemical Formula 4]

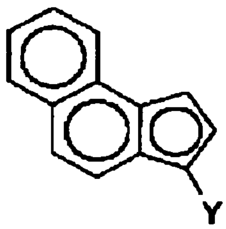
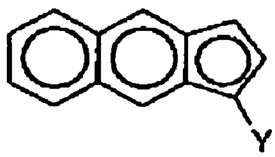
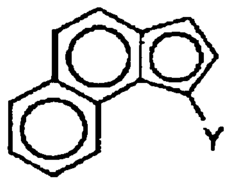

(In the formulae, Y represents the same groups as those explained in the former formula.)

<Examples of metallocene compounds - 4)

As the metallocene compounds, the compounds represented by the following general formula (5) may also be used.

[Chemical Formula 5]

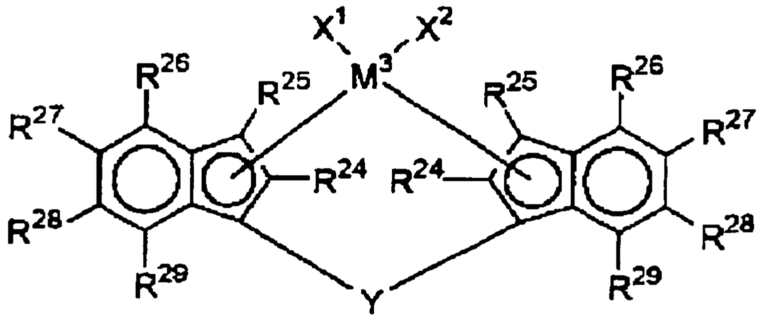

... (5)

In the formula (5), $M^3$, $R^{24}$, $R^{25}$, $R^{26}$, $R^{27}$, $R^{28}$, and $R^{29}$ are the same groups as those in the general formula (4). Among $R^{26}$, $R^{27}$, $R^{28}$, and $R^{29}$, two groups including $R^{26}$ are preferably an alkyl group, namely $R^{26}$ and $R^{28}$, or $R^{28}$ and $R^{29}$ are preferably an alkyl group. This alkyl group is preferably secondary or tertiary. Further, the alkyl group may be substituted with a halogen- or a silicon-containing group, and as the halogen- or the silicon-containing group, the substituents shown as examples in $R^{24}$ and $R^{25}$ may be mentioned. Among $R^{26}$, $R^{27}$, $R^{28}$, and $R^{29}$, the group other than the alkyl group is preferably a hydrogen atom. Further, two groups selected from $R^{26}$, $R^{27}$, $R^{28}$, and $R^{29}$ may be bonded to each other to form a monocyclic or a polycyclic ring other than an aromatic ring. As the halogen atom, there may be mentioned those atoms mentioned in the above $R^{24}$ and $R^{25}$. As $X^1$, $X^2$, and Y, there may be mentioned those groups described above.

Specific examples of the metallocene compounds represented by the general formula (5) include rac-dimethylsilylene-bis(4,7-dimethyl-1-indenyl)zirconium dichloride, rac-dimethylsilylene-bis(2,4,7-trimethyl-1-indenyl)zirconium dichloride, rac-dimethylsilylene-bis(2,4,6-trimethyl-1-indenyl)zirconium dichloride, and the like.

Further, a transition metal compounds in which zirconium metal of these compounds is replaced by a titanium metal or a hafnium metal may also be used. The transition metal compound is usually used as a racemic compound, but an R-form or an S-form may also be used.

<Examples of metallocene compounds - 5>

As the metallocene compounds, the compounds represented by the following general formula (6) may also be used.

[Chemical Formula 6]

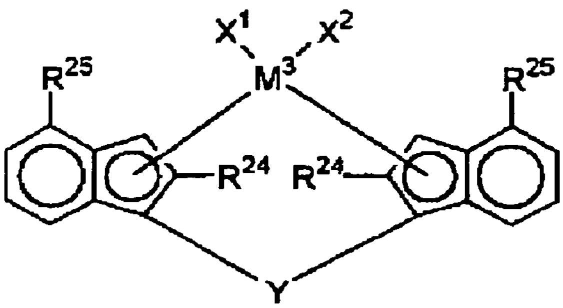

... (6)

In the formula (6), $M^3$, $R^{29}$, $X^1$, $X^2$, and Y are the same groups as those in the general formula (4). $R^{24}$ is preferably a hydrocarbon group, and particularly an alkyl group having 1 to 4 carbon atoms, namely a methyl group, an ethyl group, a propyl group, or a butyl group. $R^{25}$ represents an aryl group having 6 to 16 carbon atoms, and is preferably a phenyl group and a naphthyl group. The aryl group may be substituted with a halogen atom, a hydrocarbon group having 1 to 20 carbon atoms, or a halogenated hydrocarbon group having 1 to 20 carbon atoms. As $X^1$ and $X^2$, each is preferably a halogen atom and a hydrocarbon group having 1 to 20 carbon atoms.

Specific examples of the metallocene compounds represented by the general formula (6) include rac-dimethylsilylene-bis(4-phenyl-1-indenyl)zirconium dichloride, rac-dimethylsilylene-bis(2-methyl-4-phenyl-1-indenyl)zirconium dichloride, rac-dimethylsilylene-bis(2-methyl-4-($\alpha$-naphthyl)-1-indenyl)zirconium dichloride, rac-dimethylsilylene-bis(2-methyl-4-($\beta$-naphthyl)-1-indenyl)zirconium dichloride, rac-dimethylsilylene-bis(2-methyl-4-(1-anthryl)-1-indenyl)zirconium dichloride, and the like. Further, a transition metal compound in which zirconium metal of these compounds is replaced by a titanium metal or a hafnium metal may also be used.

<Examples of metallocene compounds - 6>

Further, as the metallocene compounds, the compounds represented by the following general formula (7) may also be used.

$$LaM^4X^3{}_2 \qquad (7)$$

Here, $M^4$ represents a metal belonging to the 4th group in the periodic table or the lanthanide series. La is a derivative of a non-localized n bond group, which gives a restricted geometric configuration to a metal $M^4$ active site. Each of $X^3$ may be the same or different, and is a hydrogen atom, a halogen atom, a hydrocarbon group having 20 or less carbon atoms, a silyl group having 20 or less silicon atoms, or a germyl group having 20 or less germanium atoms.

Among them, the compounds represented by the following formula (8) are preferable.

[Chemical Formula 7]

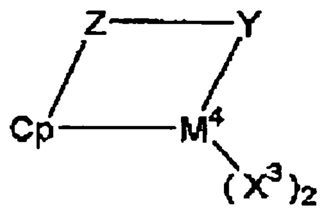

··· (8)

In the formula (8), $M^4$ represents titanium, zirconium, or hafnium. $X^3$ is the same groups as those explained in the above general formula (7). Cp is bonded to $M^4$ by a n-bond, and is a substituted cyclopentadienyl group having a Z substituent group. Z represents oxygen, sulfur, boron, or an element belonging to the 4th group in the periodic table (for instance, silicon, germanium, or tin). Y represents a ligand containing nitrogen, phosphorus, oxygen, or sulfur, and may form a condensed ring together with Z. Specific examples of the metallocene compound represented by the formula (8) include (dimethyl(t-butylamide)(tetramethyl-$\eta^5$-cyclopentadienyl)silan e)titanium dichloride, ((t-butylamide)(tetramethyl-$\eta^5$-cyclopentadienyl)-1,2-ethanedi yl)titanium dichloride, and the like. Further, a compound in which titanium of these compounds is replaced by zirconium or hafnium may also be used.

<Examples of metallocene compounds - 7>

Further, as the metallocene compounds, the compounds represented by the following general formula (9) may also be used.

[Chemical Formula 8]

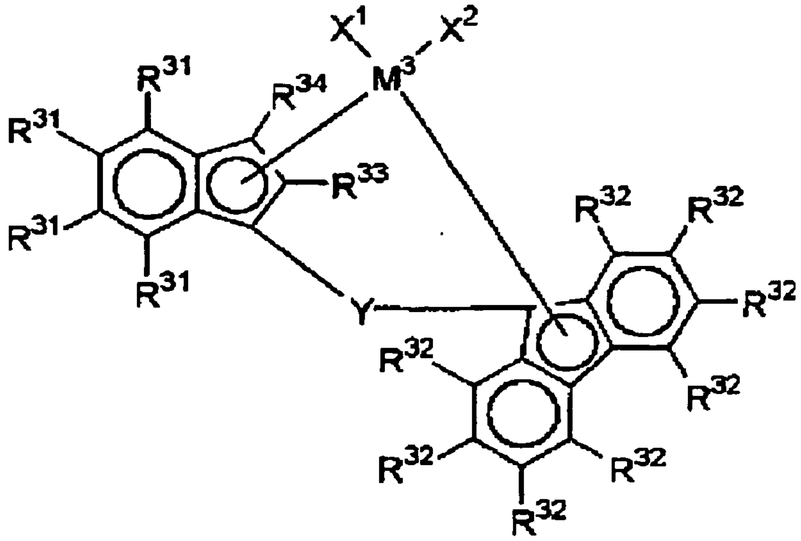

... (9)

In the formula (9), $M^3$ represents a transition metal belonging to the 4th group in the periodic table. Specifically $M^3$ represents titanium, zirconium, or hafnium, and zirconium is preferable. Each $R^{31}$ may be the same or different, and at least one of them is an aryl group having 11 to 20 carbon atoms, an arylalkyl group having 12 to 40 carbon atoms, an arylalkenyl group having 13 to 40 carbon atoms, an alkylaryl group having 12 to 40 carbon atoms, or a silicon-containing group; or at least two of the neighboring groups among the groups represented by $R^{31}$ form a single or plural aromatic or aliphatic ring(s) together with carbon atoms to which they are bonded. In this case, the ring formed by $R^{31}$ has 4 to 20 carbon atoms as the total number including the carbon atoms to which $R^{31}$ is bonded. $R^{31}$ other than the aryl group, the arylalkyl group, the arylalkenyl group, the alkylaryl group and $R^{31}$ that forms an aromatic or an aliphatic ring is a hydrogen atom, a halogen atom, an alkyl group having 1 to 10 carbon atoms, or a silicon-containing group. Each $R^{32}$ may be the same or different, and represents a hydrogen atom, a halogen atom, an alkyl group having 1 to 10 carbon atoms, an aryl group having 6 to 20 carbon atoms, an alkenyl group having 2 to 10 carbon atoms, an arylalkyl group having 7 to 40 carbon atoms, an arylalkenyl group having 8 to 40 carbon atoms, an alkylaryl group having 7 to 40 carbon atoms, a silicon-containing group, an oxygen-containing group, a sulfur-containing group, a nitrogen-containing group, or a phosphorus-containing group. Further, at least two of the neighboring groups among the groups represented by $R^{32}$ may form a single or plural aromatic ring(s) or aliphatic ring(s) together with carbon atoms bonded to them. In this case, the ring formed by $R^{32}$ has 4 to 20 carbon atoms as the total number including the carbon atoms to which $R^{32}$ is bonded. $R^{32}$ other than $R^{32}$ that forms an aromatic or an aliphatic ring is a hydrogen atom, a halogen atom, an alkyl group having 1 to 10 carbon atoms, or a silicon-containing group. Here, in the group of a single or plural aromatic or aliphatic ring(s) formed by two groups represented by $R^{32}$, a fluorenyl group in a configuration of the following structure is included.

[Chemical Formula 9]

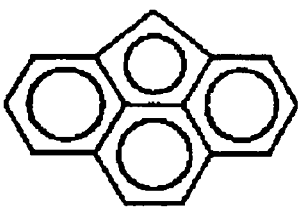

$R^{32}$ is preferably a hydrogen atom or an alkyl group, and in particular a hydrogen atom or a hydrocarbon group having 1 to 3 carbon atoms, namely a methyl group, an ethyl group, and a propyl group. As the preferable example of

the fluorenyl group having $R^{32}$ as this kind of the substituent, a 2, 7-dialkyl-fluorenyl group may be mentioned. Here, as the alkyl groups of the 2, 7-dialkyl-fluorenyl group, there may be mentioned an alkyl group having 1 to 5 carbon atoms. Further, $R^{31}$ and $R^{32}$ may be the same or different from each other. $R^{33}$ and $R^{34}$ may be the same or different from each other, and similarly to the above, they represent a hydrogen atom, a halogen atom, an alkyl group having 1 to 10 carbon atoms, an aryl group having 6 to 20 carbon atoms, an alkenyl group having 2 to 10 carbon atoms, an arylalkyl group having 7 to 40 carbon atoms, an arylalkenyl group having 8 to 40 carbon atoms, an alkylaryl group having 7 to 40 carbon atoms, a silicon-containing group, an oxygen-containing group, a sulfur-containing group, a nitrogen-containing group, or a phosphorus-containing group. Among them, at least one of $R^{33}$ and $R^{34}$ is preferably an alkyl group having 1 to 3 carbon atoms. $X^1$ and $X^2$ may be the same or different from each other, and represent a hydrogen atom, a halogen atom, a hydrocarbon group having 1 to 20 carbon atoms, a halogenated hydrocarbon group having 1 to 20 carbon atoms, an oxygen-containing group, a sulfur-containing group, a nitrogen-containing group, or a conjugated diene residue formed from $X^1$ and $X^2$. As the conjugated diene residue formed from $X^1$ and $X^2$, the residues of 1,3-butadiene, 2,4-hexadiene, 1-phenyl-1,3-pentanediene, and 1,4-diphenylbutadiene are preferable, and further these diene residues may be substituted with a hydrocarbon group having 1 to 10 carbon atoms. As $X^1$ and $X^2$, a halogen atom, a hydrocarbon group having 1 to 20 carbon atoms, or a sulfur-containing group is preferable. Y represents a divalent hydrocarbon group having 1 to 20 carbon atoms, a divalent halogenated hydrocarbon group having 1 to 20 carbon atoms, a divalent silicon-containing group, a divalent germanium-containing group, a divalent tin-containing group, -O-, -CO-, -S-, -SO-, $-SO_2-$, $-NR^{35}-$, $-P(R^{35})-$, $-P(O)(R^{35})-$, $-BR^{35}-$, or $-AlR^{35}-$ (here, $R^{35}$ represents a hydrogen atom, a halogen atom, a hydrocarbon group having 1 to 20 carbon atoms, and a halogenated hydrocarbon group having 1 to 20 carbon atoms). Among these divalent groups, a group having the structure in which the shortest connecting part of -Y- is composed of one or two atoms is preferable. Further, $R^{35}$ is a halogen atom, a hydrocarbon group having 1 to 20 carbon atoms, and a halogenated hydrocarbon group having 1 to 20 carbon atoms. Y is preferably a divalent hydrocarbon group having 1 to 5 carbon atoms, a divalent silicon-containing group, or a divalent germanium-containing group, and more preferably a divalent silicon-containing group, and particularly preferably an alkylsilylene group, an alkylarylsilylene group, or an arylsilylene group.

<Examples of metallocene compounds - 8>

Further, as the metallocene compounds, the compounds represented by the following general formula (10) may also be used.

[Chemical Formula 10]

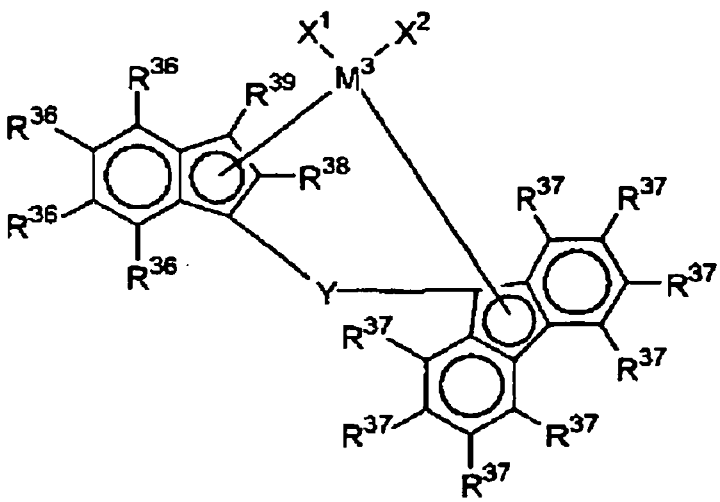

··· (10)

In the formula (10), $M^3$ represents a transition metal atom belonging to the 4th group in the periodic table, and specifically there may be mentioned titanium, zirconium, or hafnium, and zirconium is preferable. Each $R^{36}$ may be the

same or different, and represents a hydrogen atom, a halogen atom, an alkyl group having 1 to 10 carbon atoms, an aryl group having 6 to 10 carbon atoms, an alkenyl group having 2 to 10 carbon atoms, a silicon-containing group, an oxygen-containing group, a sulfur-containing group, a nitrogen-containing group, or a phosphorus-containing group. Here, the alkyl group and the alkenyl group may be substituted with a halogen atom. Among them, $R^{36}$ is preferably the alkyl group, the aryl group, or a hydrogen atom, and particularly preferably the hydrocarbon group having 1 to 3 carbon atoms, namely a methyl group, an ethyl group, an n-propyl group, and an i-propyl group; the aryl group such as a phenyl group, a α-naphthyl group, β-naphthyl group, and the like; or a hydrogen group. Each $R^{37}$ may be the same or different, and represents a hydrogen atom, a halogen atom, an alkyl group having 1 to 10 carbon atoms, an aryl group having 6 to 20 carbon atoms, an alkenyl group having 2 to 10 carbon atoms, an arylalkyl group having 7 to 40 carbon atoms, an arylalkenyl group having 8 to 40 carbon atoms, an alkylaryl group having 7 to 40 carbon atoms, a silicon-containing group, an oxygen-containing group, a sulfur-containing group, a nitrogen-containing group, or a phosphorus-containing group. Here, the alkyl group, the aryl group, the alkenyl group, the arylalkyl group, the arylalkenyl group, and the alkylaryl group may be substituted with a halogen atom. Among them, $R^{37}$ is preferably a hydrogen atom or the alkyl group, and particularly preferably a hydrogen atom or the hydrocarbon group having 1 to 4 carbon atoms, namely a methyl group, an ethyl group, an n-propyl group, an i-propyl group, an n-butyl group, and a tert-butyl group. Further, $R^{36}$ and $R^{37}$ may be the same or different from each other. Either one of $R^{38}$ or $R^{39}$ is an alkyl group having 1 to 5 carbon atoms, while the other is a hydrogen atom, a halogen atom, an alkyl group having 1 to 10 carbon atoms, an alkenyl group having 2 to 10 carbon atoms, a silicon-containing group, an oxygen-containing group, a sulfur-containing group, a nitrogen-containing group, or a phosphorus-containing group. Among them, it is preferable that either one of $R^{38}$ or $R^{39}$ is an alkyl group having 1 to 3 carbon atoms, namely a methyl group, an ethyl group, and a propyl group, and the other is a hydrogen atom. $X^1$ and $X^2$ may be the same or different from each other, and represent a hydrogen atom, a halogen atom, a hydrocarbon group having 1 to 20 carbon atoms, a halogenated hydrocarbon group having 1 to 20 carbon atoms, an oxygen-containing group, a sulfur-containing group, a nitrogen-containing group, or a conjugated diene residue formed from $X^1$ and $X^2$. Among them, a halogen atom or a hydrocarbon group having 1 to 20 carbon atoms is preferable. Y represents a divalent hydrocarbon group having 1 to 20 carbon atoms, a divalent halogenated hydrocarbon group having 1 to 20 carbon atoms, a divalent silicon-containing group, a divalent germanium-containing group, a divalent tin-containing group, -O-, -CO-, -S-, -SO-, $-SO_2-$, $-NR^{40}-$, $-P(R^{40})-$, $-P(O)(R^{40})-$, $-BR^{40}-$, or $-AlR^{40}-$ (here, $R^{40}$ represents a hydrogen atom, a halogen atom, a hydrocarbon group having 1 to 20 carbon atoms, and a halogenated hydrocarbon group having 1 to 20 carbon atoms). Among them, Y is preferably a divalent hydrocarbon group having 1 to 5 carbon atoms, a divalent silicon-containing group, or a divalent germanium-containing group, and more preferably a divalent silicon-containing group, and particularly preferably an alkylsilylene group, an alkylarylsilylene group, or an arylsilylene group.

<Examples of metallocene compounds - 9>

Further, as the metallocene compounds, the compounds represented by the following general formula (11) may also be used.

[Chemical Formula 11]

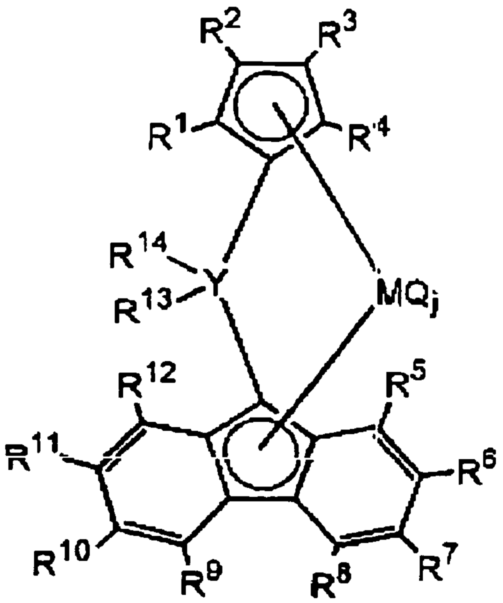

... (1 1)

In the formula (11), Y is selected from a carbon atom, a silicon atom, a germanium atom, and a tin atom, and M represents Ti Zr, or Hf. $R^1$, $R^2$, $R^3$, $R^4$, $R^5$, $R^6$, $R^7$, $R^8$, $R^9$, $R^{10}$, $R^{11}$, and $R^{12}$ are selected from a hydrogen atom, a hydrocarbon group, and a silicon-containing group. They may be the same or different from each other, and neighboring groups of $R^5$ to $R^{12}$ may be bonded with each other to form a ring structure. $R^{13}$ and $R^{14}$ are selected from a hydrocarbon group and a silicon-containing group. $R^{13}$ and $R^{14}$ may be the same or different from each other, and may be bonded with each other to form a ring structure. Q may be selected, in the same or different combinations, from a halogen atom, a hydrocarbon group, an anionic ligand, or a neutral ligand which has lone electronic pair and which is capable of coordinating to M, and j represents an integer of 1 to 4.
Hereinafter, the chemical structural characteristics of bridged metallocene compounds of the present invention, namely a cyclopentadienyl group, a fluorenyl group, a bridging group, and other characteristics will be explained in this order, then preferable bridged metallocene compounds having these characteristics will be explained.

Cyclopentadienyl group

The cyclopentadienyl group may be substituted or not. The term, the cyclopentadienyl group which may be substituted or not, refers to a cyclopentadienyl group whose $R^1$, $R^2$, $R^3$, and $R^4$ in the general formula (11) are all hydrogen atoms or at least one or more of $R^1$, $R^2$, $R^3$, and $R^4$ is substituted by a hydrocarbon group (f1), preferably a hydrocarbon group having 1 to 20 carbon atoms (f1'), or a silicon-containing group (f2), preferably a silicon-containing group having 1 to 20 carbon atoms in total (f2'). When two or more of $R^1$, $R^2$, $R^3$, and $R^4$ are substituted, those substituent groups may be the same or different from each other. Also, the hydrocarbon group having 1 to 20 carbon atoms is an alkyl group, an alkenyl group, an alkynyl group, and an aryl group, all of which are composed of only the carbon atom and the hydrogen atom. The hydrocarbon groups having 1 to 20 carbon atoms include a group in which two of any neighboring hydrogen atoms are substituted simultaneously to from an aliphatic or an aromatic ring. The hydrocarbon groups having 1 to 20 carbon atoms (f1') include, in addition to an alkyl group, an alkenyl group, an alkynyl group, and an aryl group, all of which are composed of only the carbon atom and the hydrogen atom, a heteroatom-containing hydrocarbon in which a part of hydrogen atoms directly bonded to these carbon atoms are substituted with a halogen atom, an oxygen-containing group, a nitrogen-containing group, or a silicon atom, and a group having an alicyclic ring formed by two of any neighboring hydrogen atoms. Examples of these groups (f1') include a linear hydrocarbon group such as a methyl group, an ethyl group, an n-propyl group, an allyl group, an n-butyl group, an n-pentyl group, an n-hexyl group, an n-heptyl group, an n-octyl group, an n-nonyl group, an n-decanyl group, and the like; a branched hydrocarbon group such as an isopropyl group, a t-butyl group, an amyl group, a 3-methylpentyl group, a 1,1-diethylpropyl group, a 1,1-dimethylbutyl group, a 1-methyl-1-propylbutyl group, a 1,1-propylbutyl group, 1,1-dimethyl-2-methylpropyl group, a 1-methyl-1-isopropyl-2-metylpropyl group, and the like; a cyclic saturated hydrocarbon group such as a cyclopentyl group, a cyclohexyl group, a cycloheptyl group, a cyclooctyl group, a norbornyl group, an adamantyl group, and the like; a cyclic unsaturated hydrocarbon group and derivative thereof whose ring is substituted by an alkyl group, such as a phenyl group, a naphthyl group, a biphenyl group, a phenanthryl group, a anthracenyl group, and the like; a saturated hydrocarbon group substituted with an aryl group such as a benzyl group, a cumyl group, and the like; and a heteroatom-containing hydrocarbon group such as a methoxy group, an ethoxy group, a phenoxy group, an N-methylamino group, a trifluoromethyl group, a tribromomethyl group, a pentafluoroethyl group, a pentafluorophenyl group, and the like. The term, silicon-containing group (f2), refers to, for instance, a cyclopentadienyl group whose ring carbon is covalently bonded directly to a silicon atom, and specifically mentioned are an alkylsilyl group and an arylsilyl group. The silicon-containing groups having 1 to 20 carbon atoms in total (f2') include a trimethylsilyl group, a triphenylsilyl group, and the like.

Fluorenyl group

The fluorenyl group may be substituted or not. The term, the fluorenyl group which may be substituted or not, refers to a fluorenyl group whose $R^5$, $R^6$, $R^7$, $R^8$, $R^9$, $R^{10}$, $R^{11}$, and $R^{12}$ in the general formula (11) are all hydrogen atoms or at least one or more of $R^5$, $R^6$, $R^7$, $R^8$, $R^9$, $R^{10}$, $R^{11}$, and $R^{12}$ is substituted by the hydrocarbon group (f1), preferably the hydrocarbon group having 1 to 20 carbon atoms (f1'), or the silicon-containing group (f2), preferably the silicon-containing group having 1 to 20 carbon atoms in total (f2'). When two or more of $R^5$, $R^6$, $R^7$, $R^8$, $R^9$, $R^{10}$, $R^{11}$, and $R^{12}$ are substituted, these substitute groups may be the same or different from each other. Further, neighboring groups of $R^5$, $R^6$, $R^7$, $R^8$, $R^9$, $R^{10}$, $R^{11}$, and $R^{12}$ may be bonded with each other to form a ring. Because of easiness in catalyst preparation, a fluorenyl group in which $R^6$ and $R^{11}$, and $R^7$ and $R^{10}$ are the same each other are preferably used. A preferable group of the hydrocarbon group (f1) is the hydrocarbon group (f1') having 1 to 20 carbon atoms in total, and a preferable group of the silicon-containing group (f2) is the silicon-containing group (f2') having 1 to 20 carbon atoms in total.

Covalent cross-linkage

A main-chain bonding part of the cyclopentadienyl group with the fluorenyl group is a divalent covalently cross-linkage containing one atom selected from a carbon atom, a silicon atom, a germanium atom, and a tin atom. An important point in a high-temperature solution polymerization of the present invention is that a bridging atom Y at the covalently cross-linked part contains $R^{13}$ and $R^{14}$ which may be the same or different from each other. A preferable group of the hydrocarbon group (f1) is the hydrocarbon group (f1') having 1 to 20 carbon atoms in total, and a preferable group of the silicon-containing group (f2) is the silicon-containing group (f2') having 1 to 20 carbon atoms in total.

Other characteristics of the bridged metallocene compounds

In the general formula (11), Q is selected from, in the same or different combinations, a halogen atom, a hydrocarbon group having 1 to 10 carbon atoms, or a neutral, a conjugated, or a non-conjugated diene group having 10 or less carbon atoms, an anionic ligand, or a neutral ligand which has lone electronic pair and which is capable of coordinating to M. Specific examples of the halogen atoms include a fluorine atom, a chlorine atom, a bromine atom, and an iodine atom. Specific examples of the hydrocarbon groups include a methyl group, an ethyl group, an n-propyl group, an isopropyl group, a 2-methylpropyl group, a 1,1-dimethylpropyl group, a 2,2-dimethylpropyl group, a 1,1-diethylpropyl group, a 1-ethyl-1-methylpropyl group, a 1,1,2,2-tetramethylpropyl group, a sec-butyl group, a tert-butyl group, a 1,1-dimethylbutyl group, a 1,1,3-trimethylbutyl group, a neopentyl group, a cyclohexylmethyl group, a cyclohexyl group, a 1-methyl-1-cyclohexyl group, and the like. Specific examples of the neutral, conjugated, or non-conjugated dienes having 10 or less carbon atoms include s-cis- or s-trans-$\eta^4$-1,3-butadiene, s-cis- or s-trans-$\eta^4$-1,4-diphenyl-1,3-butadiene, s-cis- or s-trans-$\eta^4$-3-methyl-1,3-pentadiene, s-cis- or s-trans-$\eta^4$-1,4-dibenzyl-1,3-butadiene, s-cis- or s-trans-$\eta^4$-2,4-hexadiene, s-cis- or s-trans-$\eta^4$-1,3-pentadiene, s-cis- or s-trans-$\eta^4$-1,4-ditolyl-1,3-butadiene, s-cis- or s-trans-$\eta^4$-1,4-bis(trimethylsilyl)-1,3-butadiene, and the like. Specific examples of the anionic ligands include an alkoxy group such as a methoxy group, a tert-butoxy group, a phenoxy group, and the like; a carboxylate group such as an acetate group, a benzoate group, and the like; a sulfonate group such as a mesylate group, a tosylate group, and the like; and others. Specific examples of the neutral ligands which have lone electronic pair and which are capable of coordinating to M include an organic phosphorus compound such as trimethyl phosphine, triethyl phosphine, triphenyl phosphine, diphenyl methyl phosphine, and the like, or an ether such as tetrahydrofuran, diethyl ether, dioxane, 1,2-dimethoxyethane, and the like. Here, j represents an integer of 1 to 4, and when j is 2 or more, each Q may be the same or different.

<Examples of metallocene compounds - 10>

Further, as the metallocene compounds, the compounds represented by the following general formula (12) may also be used.

[Chemical Formula 12]

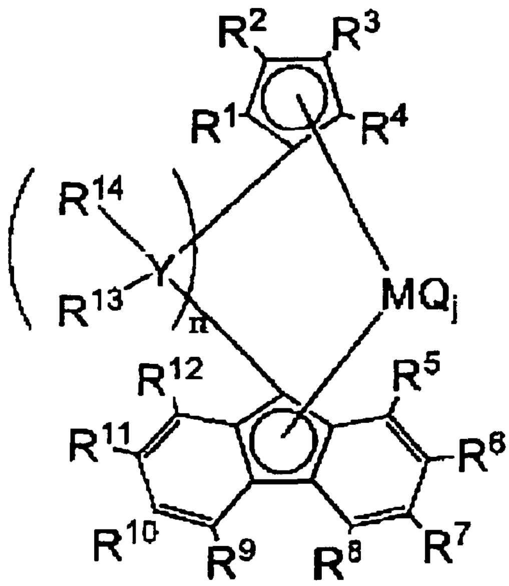

… (1 2)

In the formula, $R^1$, $R^2$, $R^3$, $R^4$, $R^5$, $R^6$, $R^7$, $R^8$, $R^9$, $R^{10}$, $R^{11}$, $R^{12}$, $R^{13}$, and $R^{14}$ are selected from a hydrogen atom, a hydrocarbon group, and a silicon-containing group. They may be the same or different from each other, and neighboring groups of $R^1$ to $R^{14}$ may be bonded with each other to form a ring structure. M represents Ti, Zr, or Hf, and Y represents an atom belonging to the 14th group. Q is selected, in the same or different combinations, from a group consisting of a halogen atom, a hydrocarbon group, a neutral, a conjugated, or a non-conjugated diene group having 10 or less carbon atoms, an anionic ligand, and a neutral ligand which has lone electronic pair and which is capable of coordinating to M. Here, n represents an integer of 2 to 4, and j represents an integer of 1 to 4.

In the general formula (12), the hydrocarbon group is preferably an alkyl group having 1 to 20 carbon atoms, an arylalkyl group having 7 to 20 carbon atoms, an aryl group having 6 to 20 carbon atoms, or an alkylaryl group having 7 to 20 carbon atoms, and may contain one or more of a ring structure.

Specific examples of the hydrocarbon groups include a methyl group, an ethyl group, an n-propyl group, an isopropyl group, a 2-methylpropyl group, a 1,1-dimethylpropyl group, a 2,2-dimethylpropyl group, a 1,1-diethylpropyl group, a 1-ethyl-1-methylpropyl group, a 1,1,2,2-tetramethylpropyl group, a sec-butyl group, a tert-butyl group, a 1, 1-dimethylbutyl group, a 1,1,3-trimethylbutyl group, a neopentyl group, a cyclohexylmethyl group, a cyclohexyl group, a 1-methyl-1-cyclohexyl group, a 1-adamantyl group, a 2-adamantyl group, a 2-methyl-2-adamantyl group, a menthyl group, a norbornyl group, a benzyl group, a 2-phenylethyl group, a 1-tetrahydronaphthyl group, a 1-methyl-1-tetrahydronaphthyl group, a phenyl group, a naphthyl group, a tolyl group, and the like.

In the general formula (12), the silicon-containing hydrocarbon group is preferably an alkyl or an arylsilyl group having 1 to 4 silicon atoms and 3 to 20 carbon atoms, and specific examples of the silicon-containing hydrocarbon group include a trimethylsilyl group, a tert-butyldimethylsilyl group, a triphenylsilyl group, and the like.

In the present invention, $R^1$ to $R^{14}$ in the general formula (12) are selected from a hydrogen atom, a hydrocarbon group, a silicon-containing hydrocarbon group, and $R^1$ to $R^{14}$ may be the same or different from each other. Preferable specific examples of the hydrocarbon group and the silicon-containing hydrocarbon group are the same groups as those mentioned above.

Neighboring substituent groups of $R^1$ to $R^{14}$ on the cyclopentadienyl ring of the general formula (12) may be bonded with each other to form a ring.

M in the general formula (12) is an element belonging to the 4th group in the periodic table, namely zirconium, titanium, or hafnium, and preferably zirconium.

Y is an atom belonging to the 14th group, and a carbon atom or a silicon atom is preferable. Here, n represents an integer of 2 to 4, and preferably 2 or 3, and particularly preferably 2.

Q is selected, in the same or different combinations, from a group consisting of a halogen atom, a hydrocarbon group, a neutral, a conjugated, or a non-conjugated diene group having 10 or less carbon atoms, an anionic ligand, and a neutral ligand which has lone electronic pair and which is capable of coordinating to M. When Q is the hydrocarbon group, a hydrocarbon group having 1 to 10 carbon atoms is more preferable.

Specific examples of the halogen atoms include a fluorine atom, a chlorine atom, a bromine atom, and an iodine atom. Specific examples of the hydrocarbon groups include a methyl group, an ethyl group, an n-propyl group, an isopropyl group, a 2-methylpropyl group, a 1,1-dimethylpropyl group, a 2,2-dimethylpropyl group, a 1,1-diethylpropyl group, a 1-ethyl-1-methylpropyl group, a 1,1,2,2-tetramethylpropyl group, a sec-butyl group, a tert-butyl group, a 1, 1-dimethylbutyl group, a 1,1,3-trimethylbutyl group, a neopentyl group, a cyclohexylmethyl group, a cyclohexyl group, a 1-methyl-1-cyclohexyl group, and the like. Specific examples of the neutral, conjugated, or non-conjugated dienes having 10 or less carbon atoms include s-cis- or s-trans-$\eta^4$-1,3-butadiene, s-cis- or s-trans-$\eta^4$-1,4-diphenyl-1,3-butadiene, s-cis- or s-trans-$\eta^4$-3-methyl-1,3-pentadiene, s-cis- or s-trans-$\eta^4$-1,4-dibenzyl-1,3-butadiene, s-cis- or s-trans-$\eta^4$-2,4-hexadiene, s-cis- or s-trans-$\eta^4$-1,3-pentadiene, s-cis- or s-trans-$\eta^4$-1,4-ditolyl-1,3-butadiene, s-cis- or s-trans-$\eta^4$-1,4-bis (trimethylsilyl) -1, 3-butadiene, and the like. Specific examples of the anionic ligands include an alkoxy group such as a methoxy group, a tert-butoxy group, a phenoxy group, and the like; a carboxylate group such as an acetate group, a benzoate group, and the like; a sulfonate group such as a mesylate group, a tosylate group, and the like, and others. Specific examples of the neutral ligands which have lone electronic pair and which are capable of coordinating to M include an organic phosphorus compound such as trimethyl phosphine, triethyl phosphine, triphenyl phosphine, diphenyl methyl phosphine, and the like, or an ether such as tetrahydrofuran, diethyl ether, dioxane, 1,2-dimethoxyethane, and the like. Here, when j is 2 or more, plural Q may be the same or different.

In the formula (12), there are plural Y, specifically, 2 to 4. Plural Y may be the same or different from each other. Plural $R^{13}$ and plural $R^{14}$ bonded to Y may be the same or different from each other. For instance, plural $R^{13}$ bonded to the same Y may be different from each other, or plural $R^{13}$ bonded to different Y may be the same with each other. Further, $R^{13}$ or $R^{14}$ themselves may form a ring.

Further, as the preferable examples of the group 4 transition metal compounds as shown by the formula (12), the compounds represented by the following general formula (13) may be mentioned.

[Chemical Formula 13]

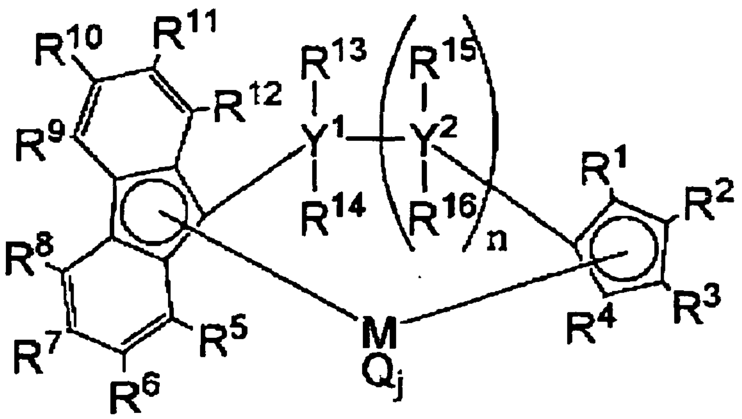

... (13)

In the formula (13), $R^1$, $R^2$, $R^3$, $R^4$, $R^5$, $R^6$, $R^7$, $R^8$, $R^9$, $R^{10}$, $R^{11}$, and $R^{12}$ are selected from a hydrogen atom, a hydrocarbon group, and a silicon-containing group, and they may be the same or different from each other. $R^{13}$, $R^{14}$, $R^{15}$, and $R^{16}$ are a hydrogen atom or a hydrocarbon group, n represents an integer of 1 to 3, and when n = 1, $R^1$ to $R^{16}$ are not hydrogen atoms at the same time, and they may be the same or different from each other. Neighboring substituents of $R^5$ to $R^{12}$ may be bonded with each other to form a ring, $R^{13}$ and $R^{15}$ may be bonded with each other to form a ring, and also $R^{14}$ and $R^{16}$ may be bonded with each other to form a ring at the same time when $R^{13}$ and $R^{15}$ is bonded with each other to form a ring. $Y^1$ and $Y^2$ represents an atom belonging to the 14th group, and may be the same or different from each other. M represents Ti, Zr, or Hf. Q may be selected, in the same or different combinations, from a group consisting of a halogen atom, a hydrocarbon group, an anionic ligand, or a neutral ligand which has lone electronic pair

and which is capable of coordinating to M. j represents an integer of 1 to 4.

Such compounds described in examples of metallocene compounds -9 and -10 are disclosed in the Japanese Patent Laid-Open Publication No. 2004-175707, the International Patent Publication Nos. of WO2001/027124, WO2004/029062, WO2004/083265, and the like.

The above-explained metallocene compounds may be used singly or in a combination of two kinds or more. Further, the metallocene compound may be used after diluted with a hydrocarbon or a halogenated hydrocarbon.

A catalyst component is composed of (A) the afore-mentioned bridged metallocene compound, and (B) at least one kind of a compound selected from (b-1) an organoaluminum oxy compound, (b-2) a compound which reacts with the bridged metallocene compound (A) to form an ion pair, and (b-3) an organoaluminum compound.

Hereinafter, the component (B) will be explained specifically.

<(b-1) Organoaluminum oxy compounds>

As the organoaluminum oxy compounds (b-1) used in the present invention, any publicly known aluminoxanes may be used as they are. Specifically, the organoaluminum oxy compound may be, for example, a compound represented by the following general formula (14)

[Chemical Formula 14]

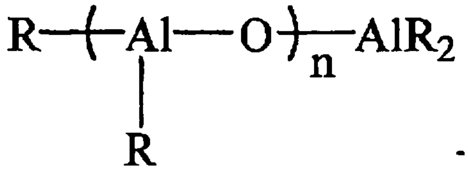

-------------- (14)

and/or a compound represented by the general formula (15),

[Chemical Formula 15]

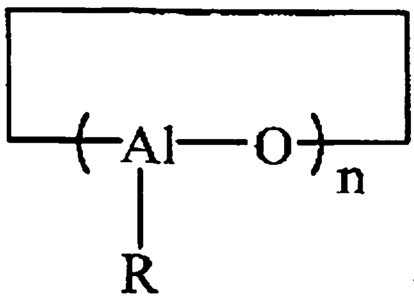

-------------- (15)

(here, R represents a hydrocarbon group having 1 to 10 carbon atoms, and n represents an integer of 2 or more). Especially, those compounds whose R is methyl, namely a methyl aluminoxane having n of 3 or more, preferably 10 or more, is used. These aluminoxanes may do well even though they may be contaminated with a small quantity of an organoaluminum compound. The high-temperature solution polymerization of the present invention is characterized in that such a benzene-insoluble organoaluminum oxy compounds as those disclosed in the Japanese Patent Laid-Open Publication No. H2-78687 can also be applied. Also, there may be suitably used an organoaluminum oxy compound disclosed in the Japanese Patent Laid-Open Publication No. H2-167305, an aluminoxane and the like having two kinds or more of alkyl groups disclosed in the Japanese Patent Laid-Open Publication Nos. H2-24701 and H3-103407. Here, the term "benzene-insoluble" organoaluminum oxy compounds used in the high-temperature solution polymerization in

the present invention refers to compounds whose Al component dissolved in benzene at 60°C is usually 10% or less, preferably 5% or less, and particularly preferably 2% or less in terms of Al atom, and are insoluble or hardly soluble in benzene.

Further, as the organoaluminum oxy compounds used in the present invention, the modified methyl aluminoxanes and the like represented by the following formula (16) may also be mentioned.

[Chemical Formula 16]

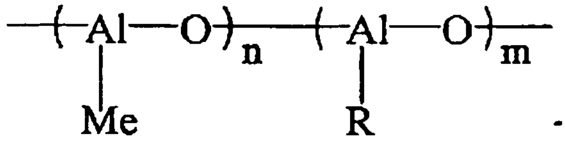

-------------- (16)

(Here, R represents a hydrocarbon group having 1 to 10 carbon atoms, and m and n represent an integer of 2 or more). This modified methyl aluminoxane is prepared by using trimethyl aluminum and an alkyl aluminum other than trimethyl aluminum. These compounds [V] are generally referred to as MMAO. Such MMAO may be prepared by methods disclosed in the US Patent Nos. 4960878 and 5041584. Further, the compound whose R is an isobutyl group, prepared from trimethyl aluminum and triisobutyl aluminum, is commercially manufactured in the name of MMAO or TMAO by Tosoh Finechem Corp. and the like. This MMAO is an aluminoxane whose solubility in various solvents and storage stability are improved. Specifically, the MMAO is soluble in an aliphatic hydrocarbon and an alicyclic hydrocarbon, contrary to such compounds as those represented by formulae (14) and (15) which are insoluble or hardly soluble in benzene.

Further, as the organoaluminum oxy compounds used in the present invention, the boron-containing organoaluminum oxy compound shown by the following general formula (17) may also be mentioned.

[Chemical Formula 17]

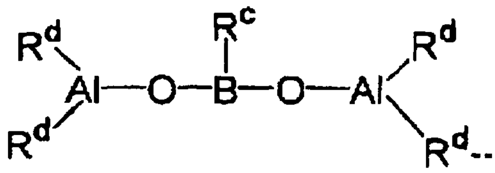

-------------- (17)

(In the formula, $R^c$ represents a hydrocarbon group having 1 to 10 carbon atoms. Each of $R^d$ may be the same or different, and represents a hydrogen atom, a halogen atom, or a hydrocarbon group having 1 to 10 carbon atoms.)

< (b-2) Compounds which react with the bridged metallocene compound (A) to form an ion pair>

As the compounds (b-2) which reacts with the bridged metallocene compound (A) to form an ion pair (hereinafter sometimes abbreviated as "an ionic compound"), there may be mentioned a Lewis acid, an ionic compound, a borane compound, a carborane compound, and the like, which are disclosed in the Japanese Patent Laid-Open Publication Nos. H1-501950, H1-502036, H3-179005, H3-179006, H3-207703, H3-207704, US Patent No. 5321106, and the like. In addition, a heteropoly compound and an isopoly compound may also be mentioned.

The ionic compounds preferably used in the present invention are represented by the following general formula (18).

[Chemical Formula 18]

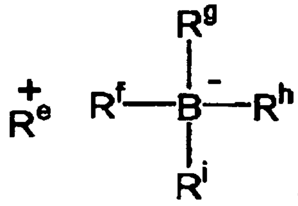

-------------- (1 8)

As the examples for $R^{e+}$ in the formula, there may be mentioned an $H^+$, a carbenium cation, an oxonium cation, an ammonium cation, a phosphonium cation, a cycloheptyl trienyl cation, a ferrocenium cation having a transition metal, and the like. $R^f$ to $R^i$ may be the same or different from each other, and are an organic group, and preferably an aryl group.

Specific examples of the carbenium cations include a tri-substituted carbenium cation, such as a triphenyl carbenium cation, a tris(methylphenyl) carbenium cation, a tris(dimethylphenyl) carbenium cation, and the like, and others.

Specific examples of the ammonium cations include a trialkyl ammonium cation such as a trimethyl ammonium cation, a triethyl ammonium cation, a tri (n-propyl) ammonium cation, a triisopropyl ammonium cation, a tri(n-butyl) ammonium cation, a triisobutyl ammonium cation, and the like; an N,N-dialkyl anilinium cation such as an N, N-dimethyl anilinium cation, an N, N-diethyl anilinium cation, an N, N-2, 4, 6-pentamethyl anilinium cation, and the like; and a dialkyl ammonium cation such as a diisopropyl ammonium cation, a dicyclohexyl ammonium cation, and the like; and others.

Specific Examples of the phosphonium cations include a triaryl phosphonium cation such as a triphenyl phosphonium cation, a tris(methylphenyl) phosphonium cation, a tris(dimethylphenyl) phosphonium cation, and the like.

Among them, $R^{e+}$ is preferably a carbenium cation, an ammonium cation, and the like, and particularly preferably a triphenyl carbenium cation, an N,N-dimethyl anilinium cation, and an N,N-diethyl anilinium cation.

Specific examples of the carbenium salts include triphenyl carbenium tetraphenyl borate, triphenyl carbenium tetrakis(pentafluorophenyl) borate, triphenyl carbenium tetrakis(3,5-ditrifluoromethylphenyl) borate, tris(4-methylphenyl) carbenium tetrakis(pentafluorophenyl) borate, tris(3,5-dimethylphenyl) carbenium tetrakis(pentafluorophenyl) borate, and the like.

As the ammonium salt, there may be mentioned a trialkyl-substituted ammonium salt, an N,N-dialkyl anilinium salt, a dialkyl ammonium salt, and the like.

Specific examples of the trialkyl ammonium salts include, triethyl ammonium tetraphenyl borate, tripropyl ammonium tetraphenyl borate, tri(n-butyl) ammonium tetraphenyl borate, trimethyl ammonium tetrakis (p-tolyl) borate, trimethyl ammonium tetrakis(o-tolyl) borate, tri(n-butyl) ammonium tetrakis(pentafluorophenyl) borate, triethyl ammonium tetrakis(pentafluorophenyl) borate, tripropyl ammonium tetrakis(pentafluorophenyl) borate, tripropyl ammonium tetrakis (2,4-dimethylphenyl) borate, tri(n-butyl) ammonium tetrakis(3,5-dimethylphenyl) borate, tri(n-butyl) ammonium tetrakis (4-trifluoromethylphenyl) borate, tri(n-butyl) ammonium tetrakis(3,5-ditrifluoromethylphenyl) borate, tri(n-butyl) ammonium tetrakis(o-tolyl) borate, dioctadecylmethyl ammonium tetraphenyl borate, dioctadecylmethyl ammonium tetrakis(p-tolyl) borate, dioctadecylmethyl ammonium tetrakis(o-tolyl) borate, dioctadecylmethyl ammonium tetrakis(pentafluorophenyl) borate, dioctadecylmethyl ammonium tetrakis(2,4-dimethylphenyl) borate, dioctadecylmethyl ammonium tetrakis(3,5-dimethylphenyl) borate, dioctadecylmethyl ammonium tetrakis(4-trifluorometylphenyl) borate, dioctadecylmethyl ammonium tetrakis(3,5-ditrifluoromethylphenyl) borate, dioctadecylmethyl ammonium, and the like.

Specific examples of the N,N-dialkyl anilinium salts include, N,N-dimethyl anilinium tetraphenyl borate, N, N-dimethyl anilinium tetrakis(pentafluorophenyl) borate, N,N-dimethyl anilinium tetrakis(3,5-ditrifluoromethylphenyl) borate, N,N-diethyl anilinium tetraphenyl borate, N,N-diethyl anilinium tetrakis(pentafluorophenyl) borate, N,N-diethyl anilinium tetrakis(3,5-ditrifluoromethylphenyl) borate, N,N-2,4,6-pentamethyl anilinium tetraphenyl borate, N,N-2,4,6-pentamethyl anilinium tetrakis(pentafluorophenyl) borate, and the like.

Specific examples of the dialkyl ammonium salts include, di(1-propyl) ammonium tetrakis(pentafluorophenyl) borate, dicyclohexyl ammonium tetraphenyl borate, and the like.

In addition to these compounds, the ionic compounds disclosed by the present inventors (Japanese Patent Laid-Open Publication No. 2004-51676) can also be used without restrictions.

Here, the ionic compounds (b-2) as mentioned above may be used in a combination of two kinds or more.

<(b-3) Organoaluminum compounds>

As the organoaluminum compounds (b-3) forming the olefin polymerization catalyst, there may be mentioned, for example, an organoaluminum compound represented by the following general formula [X], a alkylated complex compound including a metal belonging to the 1st group and aluminum as represented by the following general formula

(19), and the like.

An organoaluminum compound represented by

$$R^a_mAl\,(OR^b)_nH_pX_q \qquad (19)$$

(In the formula, $R^a$ and $R^b$ may be the same or different from each other and represent a hydrocarbon group having 1 to 15 carbon atoms, preferably 1 to 4 carbon atoms; X represents a halogen atom; m is $0 < m \leq 3$, n is $0 \leq n < 3$, p is $0 \leq p < 3$, q is $0 \leq q < 3$, and $m + n + p + q = 3$.). Specific examples of the compounds represented by the formula (19) include a tri-n-alkyl aluminum such as trimethyl aluminum, triethyl aluminum, tri-n-butyl aluminum, trihexyl aluminum, trioctyl aluminum, and the like; a tri-branched alkyl aluminum such as tri-isopropyl aluminum, tri-isobutyl aluminum, tri-sec-butyl aluminum, tri-tert-butyl aluminum, tri-2-methylbutyl aluminum, tri-3-methylhexyl aluminum, tri-2-ethylhexyl aluminum, and the like; a tricycloalkyl aluminum such as tricyclohexyl aluminum, tricyclooctyl aluminum, and the like; a triaryl aluminum such as triphenyl aluminum, tritolyl aluminum, and the like; a dialkyl aluminum hydride such as diisopropyl aluminum hydride, diisobutyl aluminum hydride, and the like; an alkenyl aluminum which is represented by the general formula $(i\text{-}C_4H_9)_xAl_y(C_5H_{10})_z$ (in the formula, x, y, and z represent a positive integer, and $z \leq 2x$) such as isoprenyl aluminum and the like; an alkyl aluminum alkoxide such as isobutyl aluminum methoxide, isobutyl aluminum ethoxide, and the like; a dialkyl aluminum alkoxide such as dimethyl aluminum methoxide, diethyl aluminum ethoxide, dibutyl aluminum butoxide, and the like; an alkyl aluminum sesquialkoxide such as ethyl aluminum sesquiethoxide, butyl aluminum sesquibutoxide, and the like; a partly alkoxylated alkyl aluminum having an average composition shown by the general formula $R^a_{2.5}Al(OR^b)_{0.5}$, and the like; an alkyl aluminum aryloxide such as diethyl aluminum phenoxide, diethyl aluminum (2,6-di-t-butyl-4-methylphenoxide), and the like; a dialkyl aluminum halide such as dimethyl aluminum chloride, diethyl aluminum chloride, dibutyl aluminum chloride, diethyl aluminum bromide, diisobutyl aluminum chloride, and the like; an alkyl aluminum sesquihalide such as ethyl aluminum sesquichloride, butyl aluminum sesquichloride, ethyl aluminum sesquibromide, and the like; a partly halogenated alkyl aluminum such as an alkyl aluminum dihalide, namely, ethyl aluminum dichloride and the like; a dialkyl aluminum hydride such as diethyl aluminum hydride, dibutyl aluminum hydride, and the like; other partly hydrogenated alkyl aluminum such as an alkyl aluminum dihydride, namely, ethyl aluminum dihydride, propyl aluminum dihydride, and the like; a partly alkoxylated and halogenated alkyl aluminum such as ethyl aluminum ethoxy chloride, butyl aluminum butoxy chloride, ethyl aluminum ethoxy bromide, and the like, and others.

$$M^2AlR^a_4 \qquad (20)$$

The alkylated complex compound between a metal belonging to the 1st group of the periodic table and aluminum represented by the general formula (20) (in the formula, $M^2$ represents Li, Na, or K, and $R^a$ represents a hydrocarbon group having 1 to 15 carbon atoms, preferably 1 to 4 carbon atoms.). As the examples of such compounds, there may be mentioned $LiAl\,(C_2H_5)_4$, $LiAl(C_7H_{15})_4$, and the like.

Further, a compound similarly to the compound represented by the general formula (20) may also be used. For example, there may be mentioned an organoaluminum compound which is formed from two or more of aluminum compounds bonded via a nitrogen atom. The specific examples of such a compound include $(C_2H_5)_2AlN(C_2H_5)Al(C_2H_5)_2$ and the like.

In view of availability, trimethyl aluminum and triisobutyl aluminum are preferably used as organoaluminum compounds (b-3).

<Polymerization>

The polyethylene wax used in the present invention may be obtained by homopolymerizing ethylene in, usually, a liquid phase, or copolymerizing ethylene and an α-olefin in the presence of the metallocene catalyst. In the polymerization, the way for using each components and the addition order may be arbitrarily selected, but the following ways may be shown as examples.

[q1] The way in which the component (A) is added alone into a polymerization vessel.

[q2] The way in which the components (A) and (B) are added into a polymerization vessel in an arbitrary order.

In the method [q2], at least two or more of each catalyst components may be contacted in advance. For this, a hydrocarbon solvent is generally used, but an α-olefin may be used as the solvent. Here, the monomers to be used are those which have already been mentioned.

In the present invention, a method for producing polyethylene wax by polymerization, which is applied to the polyethylene (1), may be carried out by a suspension polymerization in which the polyethylene wax is present as particles in a solvent such as hexane and the like, a gas-phase polymerization in which a solvent is not used, and a solution polymerization in which the polymerization is performed at the polymerization temperature of 100°C or more under the

condition that the polyethylene wax is co-present with a solvent or is in the molten. Among them the solution polymerization is preferable from the viewpoints of economic efficiency and product quality.

Further, in the present invention, a method for producing polyethylene wax by polymerization, which is applied to the polyethylene (2), may be carried out by a suspension polymerization in which the polyethylene wax is present as particles in a solvent such as hexane and the like, a gas-phase polymerization in which a solvent is not used, and a solution polymerization in which the polymerization is performed at the polymerization temperature of 140°C or more under the condition that the polyethylene wax is co-present with a solvent or is in the molten state. Among them the solution polymerization is preferable from the viewpoints of economic efficiency and product quality.

Further, in the present invention, a method for producing polyethylene wax by polymerization, which is applied to the polypropylene may be carried out by a suspension polymerization in which the polyethylene wax is present as particles in a solvent such as hexane and the like, a gas-phase polymerization in which a solvent is not used, and a solution polymerization in which the polymerization is performed at the polymerization temperature of 140°C or more under the condition that the polyethylene wax is co-present with a solvent or is in the molten state. Among them, the solution polymerization is preferable from the viewpoints of economic efficiency and product quality.

These polymerizations may be carried out by any of a batch method and a continuous method. When the polymerization is carried out in a batch method, the catalyst components are used in the concentration as explained below.

When the olefin-polymerization is carried out by using the olefin polymerization catalyst as mentioned above, the component (A) is used usually in the amount of $10^{-9}$ to $10^{-1}$, and preferably $10^{-8}$ to $10^{-2}$ mol relative to 1 liter of the reaction volume.

The component (b-1) is used in an amount such that the molar ratio [(b-1)/M] of the component (b-1) to the total transition metal (M) in the component (A) is usually 0.01 to 5,000, and preferably 0.05 to 2, 000. The component (b-2) is used in an amount such that the molar ratio [(b-2)/M] of the ionic compounds in the component (b-2) to total transition metals (M) in the component of (A) is usually 0.01 to 5,000, and preferably 1 to 2,000. The component (b-3) is used in an amount such that the molar ratio [(b-3)/M] of the component (b-3) to the total transition metal (M) in the component (A) is usually 1 to 10,000, and preferably 1 to 5,000.

The polymerization reactions are carried out with 10 g of the wax set on a filter at the temperature of usually -20 to +200°C, preferably 50 to 180°C, and further preferably 70 to 180°C; and the pressure of usually more than 0 and 7.8 MPa (80 kgf/$cm^2$, gauge pressure) or less, and preferably more than 0 and 4.9 MPa (50 kgf/$cm^2$, gauge pressure) or less.

In the polymerization, ethylene and an optionally used α-olefin are charged into a polymerization system in an amount ratio such that a polyethylene wax with the specific composition is obtained. In addition, in the polymerization, a molecular weight modifier such as hydrogen may also be added.

When the polymerization is carried out in the way as mentioned above, a polymer is usually obtained as a solution containing the polymer, a polyethylene wax may be obtained by treating the solution in accordance with a conventional method.

In the present invention, the use of a catalyst containing the metallocene compound as shown in <Examples of metallocene compounds -1> is particularly preferable.

When these catalysts are used, the polyethylene wax having the characteristics as mentioned above is easily obtained.

The shape of the polyethylene wax in the present invention is not particularly restricted, but usually particles in the form of powders, pellets, or tablet.

[Other components]

In the present invention, additives such as an antioxidant, a UV absorber, a stabilizer such as a light stabilizer and the like, a metal soap, a filler, a flame retardant, and the like, may be added to the raw materials which comprises polyethylene and the polyethylene wax, if necessary.

As the stabilizers, there may be mentioned antioxidants such as a hindered phenol compound, a phosphite compound, a thioether compound and the like;
UV absorbers such as a benzotriazole compound, a benzophenone compound, and the like; and
light stabilizers such as a hindered amine and the like.

As the metal soap, there may be mentioned stearate salts such as magnesium stearate, calcium stearate, barium stearate, zinc stearate, and the like, and others.

As the filler, there may be mentioned calcium carbonate, titanium oxide, barium sulfate, talc, clay, carbon black, and the like.

As the flame retardant, there may be mentioned halogenated diphenyl ethers such as decabromodiphenyl ether, octabromodiphenyl ether, and the like; halogenated compounds such as a halogenated polycarbonate and the like; inorganic compounds such as antimony trioxide, antimony tetaoxide, antimony pentoxide, sodium pyroantimonate,

aluminum hydroxide, and the like; and phosphorous compounds, and the like.

As the flame retardant aid for anti-dripping, compounds such as tetrafluoroethylene and the like may be added.

As the antibacterial agent and the fungicide, there may be mentioned organic compounds such as an imidazole compound, a thiazole compound, a nitrile compound, a haloalkyl compound, a pyridine compound, and the like; inorganic substances and compounds such as silver, a silver compound, a zinc compound, a cupper compound, a titanium compound, and the like, and others. Among them, silver and a silver compound are preferable because they are thermally stable and exhibit high performance.

As the silver compound, there may be mentioned a silver complex, and silver salts of an aliphatic acid, phosphoric acid, and the like. When silver and the silver compound are used as the antibacterial agent or the fungicide, they are often used after being supported on porous structures such as zeolite, silica gel, zirconium phosphate, calcium phosphate, hydrotalcite, hydroxyapatite, calcium silicate, and the like.

As other additives, there may be mentioned a coloring agent, a plasticizer, an anti-aging agent, a pigment, an oil, and the like.

[Composition ratio of the raw materials]

The composition ratio of the polyethylene and the polyethylene wax used as raw materials in the present invention is as follows. When the polyethylene (1) is used, the ratio is not particularly restricted as long as characteristics of the film to be obtained are not impaired, but usually 0.01 to 10 parts by weight and preferably 0.1 to 5 parts by weight, relative to 100 parts by weight of the polyethylene.
When the polyethylene (2) is used, the ratio is not particularly restricted as long as characteristics of the film to be obtained are not impaired, but usually 0.01 to 10 parts by weight, preferably 0.1 to 5 parts by weight, further preferably 0.3 to 3 parts by weight, and particularly preferably 0.5 to 2 parts by weight, relative to 100 parts by weight of the polyethylene. When polypropylene is used, the ratio is usually 0.01 to 10 parts by weight, preferably 0.1 to 8 parts by weight, and further preferably 0.3 to 5 parts by weight, relative to 100 parts by weight of the polypropylene.

When the polyethylene (1) or the polyethylene (2), and the polyethylene wax are used in the above-mentioned range of the composition ratio, improvement effects in fluidity at the time of the stretch molding are large, and in addition the rate of molding is further more improved, whereby the productivity tends to be improved. Further, the optical characteristics such as transparency and the like inherent in polyethylene are not impaired, and also the mechanical characteristics such as the impact strength tend to be not impaired. In some case, the molding can be carried out at further low molding temperature and the cooling time is thereby shortened, compared with the case where the stretch molding is carried out without adding the polyethylene wax. In addition, if the molding temperature is lowered, not only the thermal deterioration of the resin and the lowering of the resin strength, but also burning and black spots of the resin can be suppressed, in some cases.

In particular, in the case that the polyethylene (2) is used in the range of the composition ratio, using the polyethylene wax in the range of 0.5 to 2 parts by weight relative to 100 parts by weight of the polyethylene (2) tends to give excellent impact strength as compared with the film obtained from the polyethylene only.

Also, when the polypropylene and the polyethylene wax are used in the range of the composition ratio, improvement effects in fluidity at the time of the stretch molding tends to be large. In addition, the rate of molding tends to be further improved, whereby the productivity is improved. Further, the mechanical properties and optical properties inherent in polypropylene tend to be not impaired. Further, the molding can be carried out at further lower molding temperature and the cooling time is thereby often shortened, as compared with the case when the stretch molding is carried out without adding the polyethylene wax. In addition, if the molding temperature is lowered, not only the thermal deterioration of the resin and the lowering of the resin strength, but also burning and black spots of the resin can be suppressed, in some cases. The particularly preferable range of the polyethylene wax among the ranges mentioned is 0.5 to 2 parts by weight relative to 100 parts by weight of the polypropylene. This range is particularly preferable because impairing the optical characteristics is more suppressed.

[Stretch molding]

In the method for producing the film of the present invention, the raw materials mentioned above are stretch molded.
The method for stretch molding is not particularly restricted, and there may be mentioned the monoaxial and the biaxial stretch molding method. As the biaxial stretch molding method, the tenter method and the tube method may be mentioned.

In the case of the tenter method, a mixture comprising the polyethylene and the polyethylene wax of the present invention is usually melt kneaded in an extruder to be extruded through a T-die. The melt kneaded mixture thus obtained is cooled on a casting drum to be solidified. Then, the resulting solidified mixture is introduced between a slowly (front) driving roll and a rapidly (rear) driving roll to be stretched toward the longitudinal direction at the prescribed stretching

ratio. Then, the film stretched toward the longitudinal direction is charged into a tenter, and further stretched toward the traverse direction while holding the both side ends and heating the film, to obtain an orientated film. At the time, further thermal treatment may also be done in the tenter, in order to fix the molecular orientation in the film. Further, a non-orientated film is usually obtained by a T-die molding method, but may also be obtained by other publicly known methods.

In the case of the tube method, a film is usually produced as follow. A mixture composed of the polyethylene (1), the polyethylene (2), or the polypropylene with the polyethylene wax of the present invention is melt kneaded in an extruder. Subsequently, the molten polymer mixture is extruded through a ring die, thereby formed into a tubular form, and then cooled quickly in a cooling bath. The tube thus obtained is heated. Then, the tube is charged with an air to be pressurized, or pressure reduction is performed outside the tube, whereby the tube is stretched toward the traverse direction. At the same time, the tube is stretched toward the longitudinal direction while applying tensile force, to obtain an orientated film.

In the case of the monoaxial method, a oriented film is usually obtained by, for example, cooling a non-orientated film obtained by a T-die molding or an inflation molding and then introducing the film between a slowly (front) driving roll and a rapidly (rear) driving roll to stretch toward the longitudinal direction at the prescribed stretching ratio. Further, thermal treatment may also be performed in order to fix the molecular orientation of the film and the like.

In the case of the film production by the tenter method using an extruder equipped with a T-die, the orientated film is usually obtained as follows:

when the polyethylene (1) is used, the temperature at the inlet of the extruder is set at 130 to 200°C, the temperature at the outlet of the extruder is set at 200 to 280°C, and the dice temperature is set at 200 to 260°C. Subsequently, the resin is extruded at the resin temperature of 200 to 260°C through a T-die,
and then stretched with a prescribed stretching ratio of the longitudinal to the traverse direction;
when the polyethylene (2) is used, the temperature at the inlet of the extruder is set at 180 to 220°C, the temperature at the outlet of the extruder is set at 250 to 300°C, and the dice temperature is set at 270 to 300°C. Subsequently, the resin is extruded at the resin temperature of 270 to 300°C through a T-die, and then stretched with a prescribed stretching ratio of the longitudinal to the traverse direction; and
when the polypropylene is used, the temperature at the inlet of the extruder is set at 130 to 200°C, the temperature at the outlet of the extruder is set at 200 to 280°C, and the dice temperature is set at 200 to 260°C. Subsequently, the resin is extruded at the resin temperature of 200 to 260°C through a T-die, and then stretched with a prescribed stretching ratio of the longitudinal direction.

In the case of the film production using the tube method, the orientated film is usually obtained as follows;
when the polyethylene (1) is used, the temperature at the inlet of the extruder is set at 120 to 180°C, the temperature at the outlet of the extruder is set at 140 to 220°C, and the dice temperature is set at 140 to 210°C. Subsequently, the resin is extruded at the resin temperature of 140 to 210°C through a ring-die, and then stretched with a prescribed stretching ratio of the longitudinal to the traverse direction;
when the polyethylene (2) is used, the temperature at the inlet of the extruder is set at 130 to 160°C, the temperature at the outlet of the extruder is set at 180 to 200°C, and the dice temperature is set at 170 to 190°C. Subsequently, the resin is extruded at the resin temperature of 170 to 190°C through a ring-die, and then stretched with a prescribed stretching ratio of the longitudinal to the traverse direction; and
when the polypropylene is used, the temperature at the inlet of the extruder is set at 120 to 180°C, the temperature at the outlet of the extruder is set at 140 to 220°C, the dice temperature is set at 140 to 210°C. Subsequently, the resin is extruded at the resin temperature of 140 to 210°C through a ring-die, and then stretched with a prescribed stretching ratio of the longitudinal to the traverse direction.

In the case that a non-orientated film obtained by the T-die molding is stretched monoaxially, the orientated film is usually obtained as follows;
when the polyethylene (1) is used, the temperature at the inlet of the extruder is set at 130 to 200°C, the temperature at the outlet of the extruder is set at 200 to 280°C, and the dice temperature is set at 200 to 260°C. Subsequently, the resin is extruded at the resin temperature of 200 to 260°C through a T-die, and then stretched with a prescribed stretching ratio of the longitudinal direction;
when the polyethylene (2) is used, the temperature at the inlet of the extruder is set at 180 to 220°C, the temperature at the outlet of the extruder is set at 250 to 300°C, and the dice temperature is set at 270 to 300°C. Subsequently, the resin is extruded with the resin temperature of 270 to 300°C through a T-die, and then stretched with a prescribed stretching ratio of the longitudinal direction; and
when the polypropylene is used, the temperature at the inlet of the extruder is set at 130 to 200°C, the temperature at the outlet of the extruder is set at 200 to 280°C, and the dice temperature is set at 200 to 260°C. Subsequently, the resin is extruded at the resin temperature of 200 to 260°C through a T-die, and then stretched with a prescribed stretching ratio of the longitudinal direction.

In the case that a non-orientated film obtained by the inflation molding is stretched monoaxially, the orientated film is usually obtained as follows; when the polyethylene (1) is used, the temperature at the inlet of the extruder is set at 120 to 180°C, the temperature at the outlet of the extruder is set at 140 to 220°C, and the dice temperature is set at 140 to 210°C. Subsequently, the resin is extruded at the resin temperature of 140 to 210°C through a ring-die, and then stretched with a prescribed stretching ratio of the longitudinal direction;
when the polyethylene (2) is used, the temperature at the inlet of the extruder is set at 130 to 160°C, the temperature at the outlet of the extruder is set at 180 to 200°C, and the dice temperature is set at 170 to 190°C. Subsequently, the resin is extruded at the resin temperature of 170 to 190°C through a ring-die, and then stretched with a prescribed stretching ratio of the longitudinal direction; and
when the polypropylene is used, the temperature at the inlet of the extruder is set at 120 to 180°C, the temperature at the outlet of the extruder is set at 140 to 220°C, and the dice temperature is set at 140 to 210°C. Subsequently, the resin is extruded at the resin temperature of 140 to 210°C through a ring-die, and then stretched with a prescribed stretching ratio of the longitudinal direction.

In the present invention, the film is obtained by the stretch molding as mentioned above. The film may be a single-layer film and a multi-layer film. A single-layer film may be obtained by the stretch molding as described above. A multi-layer film may be obtained as follows; for instance, respective resin compositions for forming each film layer are melt kneaded in separate extruders. These melt kneaded mixtures thus obtained are introduced to co-extruding dies by applying pressure, and extruded through the die slits simultaneously. Then, the extruded mixture is stretched by the monoaxial stretching method or the biaxial stretching method as mentioned.

Here, in the multi-layer film obtained by the present invention, at least one layer is formed from a resin composition composed of the above-mentioned polyethylene and polyethylene wax as the raw material. However, other layers may be formed from other thermoplastic resin composition. As to the conditions of the melt kneading and the extrusion of these other thermoplastic resin compositions, conditions of the extrusion molding usually used for these thermoplastic resins may be applied.

[Examples]

Hereinafter, the present invention will be more specifically explained with reference to examples, but is not restricted thereto at all.
In the following examples, the physical properties of polyethylene and polyethylene waxes were measured as follows.

(Number average molecular weight (Mn))

The number-average molecular weight (Mn) was measured by the GPC measurement under the following conditions. The number-average molecular weight (Mn) was measured by making a calibration curve with the use of a commercially available monodisperse standard polystyrene, and then performing calculation in accordance with the following conversion method.
Apparatus: Gel Permeation Chromatograph Alliance GPC2000-type (manufactured by Waters Corp.)
Solvent: o-dichlorobenzene
Column: TSK gel column (manufactured by Tosoh Corp.) × 4
Flow rate: 1.0 ml/minute
Sample: 0.15 mg/ml o-dichlorobenzene solution
Temperature: 140°C
Molecular weight conversion: PE conversion/general calibration method
Here, the calculation of the general calibration method is done by using the coefficients of the Mark-Houwink viscosity equation as shown below.
Coefficient of polystyrene (PS): KPS = $1.38 \times 10^{-4}$, aPS = 0.70
Coefficient of polyethylene (PE): KPE = $5.06 \times 10^{-4}$, aPE = 0.70 (A value, B value)
From the result of the above GPC measurement, the ratio of the component having a molecular weight of 1,000 or less was obtained in terms of % by weight, which was taken as the A value. Also, from the result of the GPC measurement, the ratio of the component having a molecular weight of 20, 000 or more was obtained in terms of % by weight, which was taken as the B value.

(Melt viscosity)

The melt viscosity was measured at 140°C by using a Brookfield viscometer.

(Density)

The density was measured by the density gradient method according to JIS K7112.

(Melting point)

The melting point was measured by a differential scanning calorimeter (DSC) (DSC-20, manufactured by Seiko Instruments Inc.). Firstly, once a sample material is heated to 200°C, the temperature was kept at this temperature for 5 minutes, and the sample then cooled to room temperature at once. About 10 mg of this sample thus treated was subjected to measurement by DSC at the heating rate of 10°C/minute in the temperate range of from -20 to 200°C. A peak of the endothermic curve obtained from the measurement result was taken as the melting point.

(Crystallization temperature)

The crystallization temperature (Tc, °C) was measured under the condition of the cooling rate of 2°C/minute in accordance with ASTM D 3417-75.
Physical properties of the waxes used in the present invention are summarized in Table 1.

(Synthesis of polyethylene wax (1))

By using a metallocene catalyst, the polyethylene wax (1) was synthesized in the following way.
A fully nitrogen-purged stainless steel autoclave having an inner volume of 2 liters and kept at 25°C was charged with 770 ml of hexane and 115 g of propylene. After the temperature of the system was raised to 150°C, 0.3 mmol of triisobutyl aluminum, 0.04 mmol of dimethyl anilinium tetrakis(pentafluorophenyl) borate, and 0.0005 mmol of bis(cyclopentadienyl) zirconium dichloride were introduced into the autoclave by pressurization with ethylene to initiate the polymerization. Then, only ethylene was continuously charged so that the total pressure was kept at 3.0 MPa (gauge pressure), and the polymerization was carried out at 155°C for 30 minutes.
A small mount of ethanol was added in the system to terminate the polymerization, and then unreacted ethylene was purged out.
The polymer solution obtained was dried under reduced pressure at 100°C overnight to obtain 46 g of polyethylene wax (1). The polyethylene wax (1) obtained had a number-average molecular weight (Mn) of 800, a weight-average molecular weight (Mw) of 1,500, a melt viscosity of 40 mPa·s, a density of 897 $kg/m^3$, and a melting point of 78.8°C. Further, A value was 23.5% by weight and B value was 0.01% by weight. The results are shown in Table 1.

(Synthesis of polyethylene wax (2))

By using a metallocene catalyst, the polyethylene wax (2) was synthesized in the following way.
A fully nitrogen-purged stainless steel autoclave having an inner volume of 2 liters and kept at 25°C was charged with 930 ml of hexane and 35 g of propylene. After the temperature of the system was raised to 150°C, 0. 3 mmol of triisobutyl aluminum, 0.04 mmol of dimethyl anilinium tetrakis(pentafluorophenyl) borate, and 0.0005 mmol of bis(cyclopentadienyl) zirconium dichloride were introduced into the autoclave by pressurization with ethylene to initiate the polymerization. Then, only ethylene was charged so that the total pressure was kept at 3.0 MPa (gauge pressure) and the polymerization was continuously carried out at 155°C for 30 minutes.
A small amount of ethanol was added to the system to terminate the polymerization, and then unreacted ethylene was purged out. The polymer solution obtained was dried under reduced pressure at 100°C overnight to obtain 40 g of polyethylene wax (2). The polyethylene wax (2) obtained had a number-average molecular weight (Mn) of 1, 300, a weight-average molecular weight (Mw) of 3, 300, a melt viscosity of 90 mPa·s, a density of 948 $kg/m^3$, and a melting point of 115.4°C. Further, A value was 19.8% by weight and B value was 0.3% by weight. The results are shown in Table 1.
The physical properties of the waxes used in the present invention are summarized in Table 1.
[Table 1]

Table 1: Physical properties of polyolefin waxes

| | Mn | Mw | Density ($kg/m^3$) | Melt viscosity (mPa·s) | B value (% by weight) | A value (% by weight) | 0.0075XK | 230X $K^{-0.537}$ | DSC melting point (°C) | Temperature (°C) | Value of the left part of equation (III) |
|---|---|---|---|---|---|---|---|---|---|---|---|
| 30200BT | 2000 | 5000 | 913 | 300 | 2.2 | 9.3 | 2.3 | 10.8 | 98.2 | 86.6 | 91.41 |
| 48070BT | 3400 | 9000 | 902 | 1350 | 8.7 | 4.7 | 10.1 | 4.8 | 89.5 | 83.8 | 85.90 |
| 40800T | 2400 | 7000 | 980 | 600 | 4.2 | 7.3 | 4.5 | 7.4 | 127.7 | 116.2 | 124.98 |
| Polyethylene wax (1) | 800 | 1500 | 897 | 40 | 0.01 | 23.5 | 0.3 | 31.7 | 78.8 | 62.9 | 83.40 |
| Polyethylene wax (2) | 1300 | 3300 | 948 | 90 | 0.3 | 19.8 | 0.7 | 20.5 | 115.4 | 106.3 | 108.95 |
| 10500 | 700 | 1300 | 960 | 18 | 0 | 47.8 | 0.1 | 48.7 | 119.6 | 108.1 | 114.96 |
| 420P | 2000 | 6400 | 930 | 700 | 6.2 | 8.3 | 5.3 | 6.8 | 112.3 | 101.8 | 99.93 |
| A-C6 | 1800 | 6500 | 913 | 420 | 3.3 | 6.5 | 3.2 | 9.0 | 103.2 | 92.3 | 91.41 |

Physical properties of the film in the following Examples were measured in the following ways.

(Transparency)

The haze of films formed with the same film thickness was measured in accordance with JIS k7105.

(Stretchability)

The stretchability was evaluated by the maximum stress at the time of monoaxial stretching with use of a film stretching machine (BIX-703, manufactured by Iwamoto Seisakusho Co., Ltd.).
The productivity was evaluated by the maximum stretching stress.

(Mechanical characteristics)

The mechanical characteristics were evaluated by the impact strength.

(Impact strength)

The impact strength was evaluated by the film impact strength. The film impact strength was obtained in the following way.
The sample film molded with the same thickness was attached to a film impact tester (manufactured by Toyo Seiki Seisaku-sho, Ltd.) equipped with a semi-spherical hammer having a 1. 0 inch point diameter and a 3.0J volume. Then, the film was punched out vertically by the hammer at 23°C to measure the energy to break. The energy required for this breaking was divided by the film thickness to obtain the film impact strength.

<Example in the case that polyethylene (1) is used as the polyolefin resin>

[Example 1A]

First, 100 parts by mass of linear low density polyethylene resin (Evolue SP2040, manufactured by Prime Polymer Co., Ltd., density = 918 kg/$m^3$, MI = 3.8 g/10-minutes) was mixed with 2 parts by mass of a metallocene-based polyethylene wax (Exellex 30200BT, manufactured by Mitsui Chemicals, Inc., density = 913 kg/$m^3$, Mn = 2,000, A value = 9.3% by weight, B value = 2.2% by weight, melt viscosity = 300 mPa·s). Then, the mixture obtained was charged into a 20-mmφ monoaxial extruder (manufactured by Tanaka Ironworks Co., Ltd.) equipped with a T-die having a width of 240 mm, whose cylinder temperature was set at 190°C and whose dice temperature was set at 200°C. Subsequently, the mixture was melt kneaded at the rotation speed of 67 rpm to obtain a non-orientated film having 100 μm thickness through the T-die. Further, the non-orientated film obtained was charged into the film stretching machine (BIX-703, manufactured by Iwamoto Seisakusho Co., Ltd.) and the machine was pre-heated at 100°C for 2 minutes. Subsequently, the film was monoaxially stretched at the stretching rate of 10 mm/sec and the stretching ratio of 3-folds to obtain a monoaxially orientated film. The resulting film has a thickness of 30 μm. The maximum stretching stress was 0.78 MPa, the film impact strength was 47.4 KJ/m, and the haze was 1.08%. The results are shown in Table 2.

[Example 2A]

The stretch molding was performed in a similar manner to that of Example 1A except that the polyethylene wax was replaced by the metallocene-based polyethylene wax (Exellex 48070BT, manufactured by Mitsui Chemicals, Inc., density = 902 kg/$m^3$, Mn = 3,400, A value = 4.7% by weight, B value = 8.7% by weight, melt viscosity = 1,350 mPa·s). The results are shown in Table 2.

[Example 3A]

The stretch molding was performed in a similar manner to that of Example 1A except that the polyethylene wax was replaced by the metallocene-based polyethylene wax (Exellex 40800T, manufactured by Mitsui Chemicals, Inc., density = 980 kg/$m^3$, Mn = 2,400, A value = 7.3% by weight, B value = 4.2% by weight, melt viscosity = 600 mPa·s). The results are shown in Table 2.

[Example 4A]

The stretch molding was performed in a similar manner to that of Example 1A except that the polyethylene wax was replaced by the polyethylene wax (1) (density = 897 kg/$m^3$, Mn = 800, A value = 23.5% by weight, B value = 0.01% by weight, melt viscosity = 40 mPa·s). The results are shown in Table 2.

[Example 5A]

The stretch molding was performed in a similar manner to that of Example 1A except that the polyethylene wax was replaced by the polyethylene wax (2) (density = 948 kg/$m^3$, Mn = 1,300, A value = 19.8% by weight, B value = 0.3% by weight, melt viscosity = 90 mPa·s). The results are shown in Table 2.

[Example 6A]

The stretch molding was performed in a similar manner to that of Example 2A except that the amount of the metallocene-based polyethylene wax (Exellex 48070BT, Mitsui Chemicals, Inc.) was changed to 1 part by mass. The results are shown in Table 2.

[Example 7A]

The stretch molding was performed in a similar manner to that of Example 2A except that the amount of the metallocene-based polyethylene wax (Exellex 48070BT, Mitsui Chemicals, Inc.) was changed to 5 parts by mass. The results are shown in Table 2.

[Comparative example 1A]

A linear low density polyethylene resin (Evolue SP2040, manufactured by Prime Polymer Co., Ltd.) was charged into a 20 mmφ monoaxial extruder (manufactured by Tanaka Ironworks Co., Ltd.) equipped with a T-die having 240 mm width, whose cylinder temperature was set at 190°C and whose dice temperature was set at 200°C. Subsequently, the resin was melt kneaded at the rotation rate of 67 rpm to obtain a non-orientated film having 100 μm thickness through the T-die. Further, the non-orientated film obtained was charged into the film stretching machine (BIX-703, manufactured by Iwamoto Seisakusho Co., Ltd.), and the machine was pre-heated at 100°C for 2 minutes. Then, the film was monoaxially stretched at the stretching rate of 10 mm/sec and the stretching ratio of 3-folds to obtain a monoaxially orientated film. The film obtained has a thickness of 30μm. The maximum stretching stress was 0.88 MPa, the film impact strength was 47.1 KJ/m, and the haze was 1.22%. The results are shown in Table 2.

[Comparative Example 2A]

The stretch molding was performed in a similar manner to that of Example 1A except that the polyethylene wax was replaced by a polyethylene wax (Hi-WAX 420P, manufactured by Mitsui Chemicals, Inc., density = 930 kg/$m^3$, Mn = 2,000, A value = 8.3% by weight, B value = 6.2% by weight, melt viscosity = 700 mPa·s). When the resulting film is compared with the stretch film prepared only from polyethylene in the Comparative Example 1A, the maximum stretching stress is decreased. Further, the productivity at the time of molding tends to be improved, but the film impact strength, namely the impact resistance, is decreased, therefore the film is impaired in mechanical characteristics. In addition, the haze is also increased, therefore the film obtained is also impaired in optical characteristics. The results are shown in Table 2.

[Comparative Example 3A]

The stretch molding was performed in a similar manner to that of Example 1A except that the polyethylene wax was replaced by polyethylene wax (A-C6, manufactured by Honeywell Inc. , density = 913 kg/$m^3$, Mn = 1,800, A value = 6.5% by weight, B value = 3.3 % by weight, melt viscosity = 420 mPa·s). The results are shown in Table 2. When the film obtained is compared with the stretch film prepared only from polyethylene in the Comparative Example 1A, the maximum stretching stress is decreased. Further, the productivity at the time of molding tends to be improved, but the film impact strength, namely the impact resistance, is decreased, therefore the film obtained is impaired in mechanical characteristics. In addition, the haze is also increased, therefore the film obtained is also impaired in optical characteristics. The results are shown in Table 2.

[Table 2]

Table 2: Results of stretch molding

| Example/ Comparative No. | Example | Example 1A | Example 2A | Example 3A | Example 4A | Example 5A | Example 6A | Example 7A | Comparative Example 1A | Comparative Example 2A | Comparative Example 3A |
|---|---|---|---|---|---|---|---|---|---|---|---|
| Polyethylene | Kind | SP2040 | SP2040 | SP2040 | SP2040 | SP2040 | SP2040 | SP2040 | SP2040 | SP2040 | SP2040 |
| | Parts by weight | 100 | 100 | 100 | 100 | 100 | 100 | 100 | 100 | 100 | 100 |
| Polyethylene wax | Kind | 30200BT | 48070BT | 40800BT | Polyethylene wax(1) | Polyethylene wax(2) | 48070BT | 48070BT | - | 420P | A-C6 |
| | Parts by weight | 2 | 2 | 2 | 2 | 2 | 1 | 5 | - | 2 | 2 |
| Maximum stretching stress | MPa | 0.78 | 0.78 | 0.76 | 0.78 | 0.77 | 0.83 | 0.69 | 0.88 | 0.78 | 0.85 |
| Film impact strength | KJ/m | 47.4 | 47.5 | 45.3 | 46.8 | 46.3 | 47.9 | 49.3 | 47.1 | 44.7 | 44.9 |
| Haze | % | 1.08 | 1.03 | 1.24 | 1.02 | 1.17 | 1.16 | 1.01 | 1.22 | 2.39 | 2.42 |

<Example in the case that the polyethylene (2) is used as the polyolefin resin>

[Example 1B]

First, 100 parts by mass of high density polyethylene resin (Hi-ZEX 3300F, manufactured by Prime Polymer Co. Ltd., density = 952 kg/$m^3$, MI = 1.1 g/10-minutes, measured in accordance with JIS K7210 at 190°C/21.18N) was mixed with 2 parts by mass of a metallocene-based polyethylene wax (Exellex 40800T, manufactured by Mitsui Chemicals, Inc., density = 980 kg/$m^3$, Mn = 2, 400, A value = 7.3, B value = 4.2, melt viscosity = 600 mPa·s). Then, the mixture obtained was charged into a 20-mmφ monoaxial extruder (manufactured by Tanaka Ironworks Co., Ltd.) equipped with a T-die having a width of 240 mm, whose cylinder temperature was set at 250°C and whose dice temperature was 260°C. The mixture was melt kneaded at the rotation speed of 75 rpm to obtain a non-orientated film having 100 μm thickness through the T-die. Further, the non-orientated film obtained was charged into the film stretching machine (BIX-703, manufactured by Iwamoto Seisakusho Co., Ltd.), and the machine was pre-heated at 125°C for 2 minutes. Subsequently, the film was monoaxially stretched at the stretching rate of 10 mm/sec and the stretching ratio of 3-folds to obtain a monoaxially orientated film. The film obtained had a thickness of 30μm. The maximum stretching stress was 0.67 MPa, the film impact strength was 34.2 KJ/m, and the haze was 1.77%. The results are shown in Table 3.

[Example 2B]

The stretch molding was performed in a similar manner to that of Example 1B except that the polyethylene wax was replaced by the metallocene-based polyethylene wax (Exellex 30200BT, manufactured by Mitsui Chemicals, Inc., density = 913 kg/$m^3$, Mn = 2, 000, A value = 9.3, B value = 2.2, melt viscosity = 300 mPa·s). The results are shown in Table 3.

[Example 3B]

The stretch molding was performed in a similar manner to that of Example 1B except that the polyethylene wax was replaced by polyethylene wax (1) (density = 897 kg/$m^3$, Mn = 800, A value = 23.5% by weight, B value = 0.01% by weight, melt viscosity = 40 mPa·s). The results are shown in Table 3.

[Example 4B]

The stretch molding was performed in a similar manner to that of Example 1B except that the polyethylene wax was replaced by the polyethylene wax (2) (density = 948 kg/$m^3$, Mn = 1,300, A value = 19.8% by weight, B value = 0.3% by weight, melt viscosity = 90 mPa·s). The results are shown in Table 3.

[Example 5B]

The stretch molding was performed in a similar manner to that of Example 1B except that the polyethylene wax was replaced by the metallocene-based polyethylene wax (Exellex 10500, manufactured by Mitsui Chemicals, Inc., density = 960 kg/$m^3$, Mn = 700, A value = 47.8, B value = 0, melt viscosity = 18 mPa·s). The results are shown in Table 3.

[Example 6B]

The stretch molding was performed in a similar manner to that of Example 1B except that the amount of the metallocene-based polyethylene wax (Exellex 40800T, Mitsui Chemicals, Inc.) was changed to 0.5 parts by mass. The results are shown in Table 3.

[Example 7B]

The stretch molding was performed in a similar manner to that of Example 1B except that the amount of the metallocene-based polyethylene wax (Exellex 40800T, Mitsui Chemicals, Inc. ) was changed to 1 part by mass. The results are shown in Table 3.

[Example 8B]

The stretch molding was performed in a similar manner to that of Example 1B except that the amount of the metallocene-based polyethylene wax (Exellex 40800T, Mitsui Chemicals, Inc.) was changed to 5 parts by mass. The

results are shown in Table 3.

[Comparative example 1B]

A high density polyethylene resin (Hi-ZEX 3300F, manufactured by Prime Polymer Co., Ltd.) was charged into a 20 mmφ monoaxial extruder (manufactured by Tanaka Ironworks Co., Ltd.) equipped with a T-die having 240 mm width, whose cylinder temperature was set at 250°C and whose dice temperature was set at 260°C. Subsequently, the resin was melt kneaded at the rotation rate of 75 rpm to obtain a non-orientated film having 100 μm thickness through the T-die. Further, the non-orientated film obtained was charged into the film stretching machine (BIX-703, manufactured by Iwamoto Seisakusho Co., Ltd.), and the machine was pre-heated at 125°C for 2 minutes. Subsequently, the film was monoaxially stretched at the stretching rate of 10 mm/sec and the stretching ratio of 3-folds to obtain a monoaxially orientated film. The film obtained had a thickness of 30μm. The maximum stretching stress was 0.78 MPa, the impact strength was 34.1 KJ/m, and the haze was 1.84%. The results are shown in Table 3.

[Comparative Example 2B]

The stretch molding was performed in a similar manner to that of Example 1B except that the polyethylene wax was replaced by a polyethylene wax (Hi-WAX 420P, manufactured by Mitsui Chemicals, Inc., density = 930 kg/$m^3$, Mn = 2,000, A value = 8.3, B value = 6.2, and melt viscosity = 700 mPa·s). The results are shown in Table 3. When the film obtained is compared with the stretch film prepared only from polyethylene in the Comparative Example 1, although the moldability at the time of molding is improved, the tensile break stress is remarkably decreased.

[Comparative Example 3B]

The stretch molding was performed in a similar manner to that of Example 1 except that the polyethylene wax was replaced by a polyethylene wax (A-C6, manufactured by Honeywell Inc., density = 913 kg/$m^3$, Mn = 1,800, A value = 6.5, B value = 3.3, melt viscosity = 420 mPa·s). The results are shown in Table 3. When the film obtained is compared with the stretch film prepared only from polyethylene in the Comparative Example 1B, although the moldability at the time of molding is improved, the tensile break stress is remarkably decreased.

[Table 3]

Table 3: Results of T-die molding

| Example/ Comparative No. | Example | Example 1B | Example 2B | Example 3B | Example 4B | Example 5B | Example 6B | Example 7B | Example 8B | Comparative Example 1B | Comparative Example 2B | Comparative Example 3B |
|---|---|---|---|---|---|---|---|---|---|---|---|---|
| Polyethylene | Kind | 3300F | 3300F | 3300F | 3300F | 3300F | 3300F | 3300F | 3300F | 3300F | 3300F | 3300F |
| | Parts by weight | 100 | 100 | 100 | 100 | 100 | 100 | 100 | 100 | 100 | 100 | 100 |
| Polyethylene wax | Kind | 40800T | 302008T | Polyethylene wax(1) | Polyethylene wax(2) | 10500 | 40800T | 40800T | 40800T | - | 420P | A-C6 |
| | Parts by weight | 2 | 2 | 2 | 2 | 2 | 0.5 | 1 | 5 | - | 2 | 2 |
| Maximum stretching stress | MPa | 0.67 | 0.59 | 0.59 | 0.61 | 0.64 | 0.74 | 0.70 | 0.56 | 0.78 | 0.67 | 0.64 |
| Film impact strength | KJ/m | 34.2 | 34.8 | 34.2 | 34.6 | 34.9 | 34.9 | 35.1 | 34.1 | 34.1 | 31.8 | 29.8 |
| Haze | % | 1.77 | 1.75 | 1.71 | 1.73 | 1.75 | 1.77 | 1.75 | 1.82 | 1.84 | 1.75 | 1.73 |

<Example in the case that the polypropylene is used as the polyolefin resin>

[Example 1C]

First, 100 parts by mass of the polypropylene resin (Prime Polypro F113G, manufactured by Prime Polymer Co., Ltd.)(polypropylene homopolymer) MI = 3.0 g/10-minutes, in accordance with JIS K7210) was mixed with 2 parts by mass of the metallocene-based polyethylene wax (Exellex 30200BT, manufactured by Mitsui Chemicals, Inc., density = 913 kg/m$^3$, Mn = 2, 000, A value = 9.3% by weight, B value = 2.2% by weight, melt viscosity = 300 mPa·s, ethylene content = 95% by mol). Subsequently, the mixture was melt kneaded by a 65-mmφ monoaxial extruder equipped with a T-die having a lip width of 600 mm to obtain a sheet having 500 μm thickness. Then a biaxially orientated film having 20μm thickness was prepared by using a batch-type simultaneous biaxial stretch machine under the condition of pre-heating at 140°C for 5 minutes, the stretching rate of 300 mm/sec, the stretching ratio of 5-folds (both MD and TD directions), and the anneal condition of 140°C for 1 minute. The maximum stretching stress at the time of the biaxial stretching was 3.9 MPa. Further, the uneven film thickness was not observed, and molding processability was good. The impact strength of the biaxially orientated film was 72.2 kJ/m, and the haze was 0.74%. The haze of the sheet obtained by curing the prepared sheet at 120°C for 24 hours in an air oven was 0.98%. The results are shown in Table 4.

[Example 2C]

The stretch molding was performed in a similar manner to that of Example 1C except that the polyethylene wax was replaced by the polyethylene wax (Exellex 48070BT, manufactured by Mitsui Chemicals, Inc., density = 902 kg/m$^3$, Mn = 3,400, A value = 4.7% by weight, B value = 8.7% by weight, melt viscosity = 1,350 mPa·s, ethylene content = 92% by mol). The results are shown in Table 4.

[Example 3C]

The stretch molding was performed in a similar manner to that of Example 1C except that the polyethylene wax was replaced by the polyethylene wax (1) (density = 897 kg/m$^3$, Mn = 800, A value = 23.5% by weight, B value = 0.01% by weight, melt viscosity = 40 mPa·s, ethylene content = 90% by mol). The results are shown in Table 4.

[Example 4C]

The stretch molding was performed in a similar manner to that of Example 1C except that the polyethylene wax was replaced by the polyethylene wax (2) (density = 948 kg/m$^3$, Mn = 1,300, A value = 19. 8% by weight, B value = 0.3% by weight, melt viscosity = 90 mPa·s, ethylene content = 96% by mol). The results are shown in Table 4.

[Example 5C]

The stretch molding was performed in a similar manner to that of Example 1C except that the amount of the polyethylene wax (Exellex 30200BT, Mitsui Chemicals, Inc.) was changed to 1 part by mass. The results are shown in Table 4.

[Example 6C]

The stretch molding was performed in a similar manner to that of Example 1C except that the amount of the polyethylene wax (Exellex 30200BT, Mitsui Chemicals, Inc.) was changed to 5 parts by mass. The results are shown in Table 4.

[Comparative example 1C]

A polypropylene resin (Prime Polypro F113G, manufactured by Prime Polymer Co., Ltd.) (polypropylene homopolymer) MI = 3.0 g/10-minutes, in accordance with JIS K7210) was melt kneaded by a 65-mmφ monoaxial extruder equipped with a T-die having a lip width of 600 mm to obtain a sheet having 500 μm thickness. Then a biaxially orientated film having 20μm thickness was prepared by using a batch-type simultaneous biaxial stretch machine, under the condition of pre-heating at 140°C for 5 minutes, the stretching rate of 300 mm/sec, the stretching ratio of 5-folds (both MD and TD directions), and the anneal condition of 140°C for 1 minute. The maximum stretching stress at the time of biaxial stretching was 4.3 MPa. The impact strength of the biaxially orientated film was 66.9 kJ/m, and the haze was 0.70%. The haze of the sheet obtained by curing the prepared sheet at 120°C for 24 hours in an air oven was 0.84%. The results

are shown in Table 4.

[Comparative Example 2C]

The stretch molding was performed in a similar manner to that of Example 1C except that the polyethylene wax was replaced by a polyethylene wax (Exellex 10500, manufactured by Mitsui Chemicals, Inc., density = 960 kg/m$^3$, Mn = 700, A value = 47.8% by weight, B value = 0% by weight, melt viscosity = 18 mPa·s, ethylene content = 100% by mol). The results are shown in Table 4.

[Comparative Example 3C]

The stretch molding was performed in a similar manner to that of Example 1C except that the polyethylene wax was replaced by a polyethylene wax (Exellex 40800T, manufactured by Mitsui Chemicals, Inc., density = 980 kg/m$^3$, Mn = 2,400, A value = 7.3, B value = 4.2, melt viscosity = 600 mPa·s, ethylene content =100% by mol). The results are shown in Table 4.

[Comparative Example 4C]

The stretch molding was performed in a similar manner to that of Example 1C except that the polyethylene wax was replaced by a polyethylene wax (Hi-WAX 420P, manufactured by Mitsui Chemicals, Inc., density = 930 kg/m$^3$, Mn = 2,000, A value = 8.3% by weight, B value = 6.2 % by weight, melt viscosity = 700 mPa·s, ethylene content = 97% by mol). The results are shown in Table 4.

[Comparative Example 5C]

The stretch molding was performed in a similar manner to that of Example 1C except that the polyethylene wax was replaced by a polyethylene wax (A-C6, manufactured by Honeywell Inc., density = 913 kg/m$^3$, Mn = 1,800, A value = 6.5% by weight, B value = 3.3 % by weight, melt viscosity = 420 mPa·s). The results are shown in Table 4.

[Table 4]

Table 4: Results of biaxial stretch molding

| Example/Comparative Example No. | | Example 1C | Example 2C | Example 3C | Example 4C | Example 5C | Example 6C | Comparative Example 1C | Comparative Example 2C | Comparative Example 3C | Comparative Example 4C | Comparative Example 5C |
|---|---|---|---|---|---|---|---|---|---|---|---|---|
| Polypropylene | Kind | F113G | F113G | F113G | F113G | F113G | F113G | F113G | F113G | F113G | F113G | F113G |
| | Parts by weight | 100 | 100 | 100 | 100 | 100 | 100 | 100 | 100 | 100 | 100 | 100 |
| Polyethylene wax | Kind | 30200BT | 48070BT | Polyethylene wax(1) | Polyethylene wax(2) | 30200BT | 30200BT | - | 10500 | 40800 | 420P | A-C6 |
| | Parts by weight | 2 | 2 | 2 | 2 | 1 | 5 | - | 2 | 2 | 2 | 2 |
| Maximum stretching stress | | 3.9 | 3.9 | 3.8 | 3.9 | 4.0 | 3.7 | 4.3 | 3.9 | 3.9 | 3.8 | 3.8 |
| Impact strength | | 72.2 | 69.7 | 74.6 | 70.1 | 68.1 | 69.2 | 66.9 | 69.5 | 65.3 | 64.2 | 62.7 |
| Haze | Before curing | 0.74 | 0.73 | 0.75 | 0.68 | 0.69 | 0.74 | 0.70 | 0.95 | 0.79 | 0.77 | 0.81 |
| | After curing | 0.98 | 1.02 | 0.92 | 2.8 | 0.88 | 1.05 | 0.84 | 6.7 | 6.2 | 5.8 | 0.97 |

[Example 7C]

First, 100 parts by mass of polypropylene resin (Prime Polypro F219DA, polypropylene random copolymer, manufactured by Prime Polymer Co., Ltd., MI = 8. 0 g/10-minutes, in accordance with JIS K7210) was mixed with 2 parts by mass of a polyethylene wax (Exellex 30200BT, manufactured by Mitsui Chemicals, Inc., density = 913 kg/m$^3$, Mn = 2,000, A value = 9.3% by weight, B value = 2.2% by weight, melt viscosity = 300 mPa·s, ethylene content = 95% by mol). Subsequently, the mixture was melt kneaded by a 65-mmφ monoaxial extruder equipped with a T-die having a lip width of 600 mm to obtain a sheet having 500 μm thickness. Then, a biaxially orientated film having 20μm thickness was prepared by using a batch-type simultaneous biaxial stretch machine, under the condition of pre-heating at 140°C for 5 minutes, the stretching rate of 300 mm/sec, the stretching ratio of 5-folds (both MD and TD directions), and the anneal condition of 140°C for 1 minute. The maximum stretching stress at the time of biaxial stretching was 2.7 MPa. Further, uneven film thickness was not observed and molding processability was good. The impact strength of the

biaxially orientated film was 91.7 kJ/m, and the haze was 0.67%. The haze of the sheet obtained by curing the prepared sheet at 120°C for 24 hours in an air oven was 0.88%. The results are shown in Table 5.

[Example 8C]

The stretch molding was performed in a similar manner to that of Example 7C except that the polyethylene wax was replaced by a polyethylene wax (Exellex 48070BT, manufactured by Mitsui Chemicals, Inc., density = 902 kg/$m^3$, Mn = 3,400, A value = 4.7% by weight, B value = 8.7% by weight, melt viscosity = 1, 350 mPa·s, ethylene content = 92% by mol). The results are shown in Table 5.

[Example 9C]

The stretch molding was performed in a similar manner to that of Example 7C except that the polyethylene wax was replaced by a polyethylene wax (1) (density = 897 kg/$m^3$, Mn = 800, A value = 23.5% by weight, B value = 0.01% by weight, melt viscosity = 40 mPa·s, ethylene content = 90% by mol). The results are shown in Table 5.

[Example 10C]

The stretch molding was performed in a similar manner to that of Example 7C except that the polyethylene wax was replaced by a polyethylene wax (2) (density = 948 kg/$m^3$, Mn = 1, 300, A value = 19.8% by weight, B value = 0.3% by weight, melt viscosity = 90 mPa·s, ethylene content = 96% by mol). The results are shown in Table 5.

[Example 11C]

The stretch molding was performed in a similar manner to that of Example 1 except that the amount of the polyethylene wax (Exellex 30200BT, Mitsui Chemicals, Inc.) was changed to 1 part by mass. The results are shown in Table 5.

[Example 12C]

The stretch molding was performed in a similar manner to that of Example 7C except that the amount of the polyethylene wax (Exellex 30200BT, Mitsui Chemicals, Inc.) was changed to 5 parts by mass. The results are shown in Table 5.

[Comparative example 6C]

A polypropylene resin (Prime Polypro F219DA, polypropylene random copolymer, manufactured by Prime Polymer Co., Ltd., MI = 8.0 g/10-minutes, in accordance with JIS K7210) was melt kneaded by a 65-mmφ monoaxial extruder equipped with a T-die having a lip width of 600 mm to obtain a sheet having 500 μm thickness. Then, a biaxially orientated film having 20μm thickness was prepared by using a batch-type simultaneous biaxial stretch machine under the condition of pre-heating at 140°C for 5 minutes, the stretching rate of 300 mm/sec, the stretching ratio of 5-folds (both MD and TD directions), and the anneal condition of 140°C for 1 minute. The maximum stretching stress at the time of biaxial stretching was 2. 9 MPa. The impact strength of the biaxially orientated film was 85.0 kJ/m, and the haze was 0.63%. The haze of the sheet obtained by curing the prepared sheet at 120°C for 24 hours in an air oven was 0.76%. The results are shown in Table 5.

[Comparative Example 7C]

The stretch molding was performed in a similar manner to that of Example 7C except that the polyethylene wax was replaced by a polyethylene wax (Exellex 10500, manufactured by Mitsui Chemicals, Inc., density = 960 kg/$m^3$, Mn = 700, A value = 47.8% by weight, B value = 0% by weight, melt viscosity = 18 mPa·s, ethylene content = 100% by mol). The results are shown in Table 5.

[Comparative Example 8C]

The stretch molding was performed in a similar manner to that of Example 7C except that the polyethylene wax was replaced by a polyethylene wax (Exellex 40800T, manufactured by Mitsui Chemicals, Inc., density = 980 kg/$m^3$, Mn = 2,400, A value = 7.3, B value = 4.2, melt viscosity = 600 mPa·s, ethylene content = 100% by mol). The results are

shown in Table 5.

[Comparative Example 9C]

The stretch molding was performed in a similar manner to that of Example 7C except that the polyethylene wax was replaced by a polyethylene wax (Hi-WAX 420P, manufactured by Mitsui Chemicals, Inc., density = 930 $kg/m^3$, Mn = 2,000, A value = 8.3% by weight, B value = 6.2 % by weight, melt viscosity = 700 mPa·s, ethylene content = 97% by mol). The results are shown in Table 5.

[Comparative Example 10C]

The stretch molding was performed in a similar manner to that of Example 7C except that the polyethylene wax was replaced by a polyethylene wax (A-C6, manufactured by Honeywell Inc., density = 913 $kg/m^3$, Mn = 1,800, A value = 6. 5% by weight, B value = 3.3 % by weight, melt viscosity = 420 mPa·s). The results are shown in Table 5.
[Table 5]

Table 5: Results of biaxial stretch molding

| Example/Comparative Example No. | | Example 7C | Example 8C | Example 9C | Example 10C | Example 11C | Example 12C | Comparative Example 6C | Comparative Example 7C | Comparative Example 8C | Comparative Example 9C | Comparative Example 10C |
|---|---|---|---|---|---|---|---|---|---|---|---|---|
| Resin | Kind | F219DA | F219DA | F219DA | F219DA | F219DA | F219DA | F219DA | F219DA | F219DA | F219DA | F219DA |
| | Parts by weight | 100 | 100 | 100 | 100 | 100 | 100 | 100 | 100 | 100 | 100 | 100 |
| Polyethylene wax | Kind | 30200BT | 48070BT | Polyethylene wax(1) | Polyethylene wax(2) | 30200BT | 30200BT | - | 10500 | 40800 | 420P | A-C6 |
| | Parts by weight | 2 | 2 | 2 | 2 | 1 | 5 | - | 2 | 2 | 2 | 2 |
| Maximum stretching stress | | 2.7 | 2.7 | 2.6 | 2.7 | 2.8 | 2.6 | 3.0 | 2.8 | 2.7 | 2.7 | 2.6 |
| Impact strength | | 89.1 | 88.9 | 95.8 | 90.1 | 88.1 | 85.1 | 86.0 | 88.5 | 83.5 | 82.1 | 79.5 |
| Haze | Before curing | 0.72 | 0.68 | 0.69 | 0.65 | 0.65 | 0.68 | 0.67 | 0.89 | 0.75 | 0.67 | 0.75 |
| | After curing | 0.89 | 0.91 | 0.85 | 2.4 | 0.81 | 0.91 | 0.81 | 5.9 | 5.3 | 4.9 | 0.9 |

[Industrial Applicability]

According to the present invention, the load to a screw of an extruder can be decreased by adding a specific polyolefin wax to a thermoplastic resin so that the productivity of an extruding molding can be improved.

## Claims

1. A process for producing an orientated film by a stretch molding of a mixture comprising a polyolefin resin and a polyethylene wax, the polyethylene wax having a density of 890 to 980 $kg/m^3$ as measured by the density gradient tube method in accordance with JIS K7112 and a number-average molecular weight (Mn) in terms of polyethylene of 500 to 4,000 as measured by the gel permeation chromatography (GPC) and satisfying the relationship shown by the following equation (I).

$$B \leq 0.0075 \times K \quad \ldots (I)$$

(In the above formula (I), B represents the weight ratio (% by weight) of a component having a molecular weight of 20, 000 or more in terms of polyethylene in the polyethylene wax as measured by the gel permeation chromatography, and K represents the melt viscosity (mPa·s) of the polyethylene wax at 140°C.)

2. A process for producing an orientated film according to claim 1, wherein the polyethylene wax further satisfies the relationship shown by the following equation (II).

$$A \leq 230 \times K^{(-0.537)} \quad ...(II)$$

(In the above formula (II), A represents the weight ratio (% by weight) of a component having a molecular weight of 1, 000 or less in terms of polyethylene in the polyethylene wax as measured by the gel permeation chromatography, and K represents the melt viscosity (mPa·s) of the polyethylene wax at 140°C.)

**3.** A process for producing an orientated film according to claims 1 or 2, wherein the polyolefin resin is a polyethylene having a density of 900 $kg/m^3$ or more and less than 940 $kg/m^3$ as measured by the density gradient tube method in accordance with JIS K7112 and an MI of 0.01 to 100 g/10-minutes as measured at 190°C and a testing load of 21.18 N in accordance with JIS K7210.

**4.** A process for producing an orientated film according to claims 1 or 2, wherein the polyolefin resin is a polyethylene having a density of 940 to 980 $kg/m^3$ as measured by the density gradient tube method in accordance with JIS K7112 and an MI of 0.01 to 100 g/10-minutes as measured at 190°C and a testing load of 21.18 N in accordance with JIS K7210, and the number-average molecular weight of the polyethylene wax in terms of polyethylene (Mn) as measured by the gel permeation chromatography (GPC) is 500 to 3,000.

**5.** A process for producing an orientated film according to claims 1 or 2, wherein the polyolefin resin is a polypropylene having an MI of 0.01 to 100 g/10-minutes as measured at 230°C and a testing load of 21.18 N in accordance with JIS K7210, and the density of the polyethylene wax is 890 to 950 $kg/m^3$ as measured by the density gradient tube method in accordance with JIS K7112 and the number-average molecular weight (Mn) thereof in terms of polyethylene as measured by the gel permeation chromatography (GPC) is 700 to 4,000.

**6.** A process for producing an orientated film according to any of claims 1 to 5, wherein a mixture comprising 0.01 to 10 parts by weight of the polyolefin wax relative to 100 parts by weight of the polyolefin resin is used.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H580492 B
- JP 2003528948 A
- JP H4268307 B
- JP 2004175707 A
- WO 2001027124 A
- WO 2004029062 A
- WO 2004083265 A
- JP H278687 B
- JP H2167305 B
- JP H224701 B
- JP H3103407 B
- US 4960878 A
- US 5041584 A
- JP H1501950 B
- JP H1502036 B
- JP H3179005 B
- JP H3179006 B
- JP H3207703 B
- JP H3207704 B
- US 5321106 A
- JP 2004051676 A